# EUROPÄISCHE PATENTSCHRIFT

(11) **EP 3 205 481 B1**
(45) Veröffentlichungstag und Bekanntmachung des Hinweises auf die Patenterteilung: **04.12.2019**
(21) Anmeldenummer: 16155441.5
(22) Anmeldetag: 12.02.2016
(51) Int. Cl.: B29C 65/16, B29C 65/78

(54) **VERFAHREN UND VORRICHTUNG ZUR VERBINDUNG VON LICHTSCHEIBE UND LEUCHTENGEHÄUSE EINER FAHRZEUGLEUCHTE MITTELS LASERSCHWEISSENS**
METHOD AND DEVICE FOR CONNECTING LENS AND LAMP HOUSING OF A VEHICLE LIGHT USING LASER WELDING
PROCEDE ET DISPOSITIF DE LIAISON DE VERRE DE FEUX ET DE BOITIERS D'UNE LAMPE DE VEHICULE PAR SOUDAGE AU LASER

(43) Veröffentlichungstag der Anmeldung: 16.08.2017
(73) Patentinhaber: odelo GmbH, 70329 Stuttgart (DE)
(72) Erfinder: PUSCH, Reiner, 73650 Winterbach (DE); ECKSTEIN, Volker, 71554 Weissach im Tal (DE)
(74) Vertreter: Benninger, Johannes

(56) Entgegenhaltungen:
- WO-A1-2011/138567
- WO-A1-2011/138568
- DE-A1-102006 053 044
- DE-A1-102007 042 739
- DE-A1-102012 216 664
- DE-A1-102013 217 647
- DE-A1-102013 220 497
- FR-A1- 3 020 585
- KR-A- 20100 029 975
- René Geiger ET AL: "44 JOINING PLASTICS 2/07 Hybridschweißen von Kunststoffen - Durch den kombinierten Einsatz von Laserstrahlung und Heizstrahlung beim Schweißprozess eröffnen sich völlig neue Anwendungsfelder Hybrid welding of plastics -The combined utilisation of laser radiation and heating radiation during the weld", , 1. Januar 2007 (2007-01-01), XP055257824, Gefunden im Internet: URL:http://www.lpkfusa.com/articles/lq/Joi ningPlastics-2_07.pdf [gefunden am 2016-03-14]

## Beschreibung

Die Erfindung betrifft ein Verfahren zur Verbindung einer Lichtscheibe und eines Leuchtengehäuses einer Fahrzeugleuchte durch Laserschweissen gemäß Anspruch 1 sowie eine zur Durchführung des Verfahrens geeignete Vorrichtung zur Verbindung von Lichtscheibe und Leuchtengehäuse einer Fahrzeugleuchte mittels Laserschweissens gemäß dem Oberbegriff des Anspruchs 9.

Eine Fahrzeugleuchte umfasst einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Das von der wenigstens einen Lichtquelle des mindestens einen in dem Leuchteninnenraum beherbergten Leuchtmittels abgegebene Licht tritt durch mindestens eine Lichtaustrittsöffnung aus dem Leuchteninnenraum aus.

Die Lichtscheibe ist durch eine transparente Abdeckung gebildet, welche die mindestens eine Lichtaustrittsöffnung abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls jeweils durch eigene oder paar- oder gruppenweise gemeinsame Lichtscheiben abgeschlossene Lichtaustrittsöffnungen unterteilt sein, von denen mehrere Kammern gleiche und/oder jede Kammer eine andere Lichtfunktionen erfüllen kann.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Um einen bestmöglichen Schutz der im Leuchteninnenraum einer Fahrzeugleuchte beherbergte Bauteile vor Umwelt- und Witterungseinflüssen zu erhalten, muss die Lichtscheibe die Lichtaustrittsöffnung möglichst dicht abschließen und in ihrer dicht abschließenden Position am Leuchtengehäuse festgelegt sein.

Es bietet sich an, eine stoffschlüssige Verbindung vorzusehen, die zusätzlich zu einer mechanischen Verbindung, welche die Lichtscheibe in ihrer dicht abschließenden Position am Leuchtengehäuse festlegt, zugleich einen dichten Abschluss des Übergangs an der Grenze zwischen der Lichtscheibe und dem Leuchtengehäuse bewirkt.

Nachdem sowohl das Leuchtengehäuse, als auch die Lichtscheibe heutzutage überwiegend aus Kunststoff hergestellt sind, kann eines solche stoffschlüssige Verbindung durch eine Schweissverbindung hergestellt werden.

Zur Herstellung der Schweissverbindung kommen verschiedene Schweissverfahren in Betracht, von denen sich aufgrund der Anforderungen an und auch dem Einfluss auf die Produktionsumgebung das Laserschweissen als am besten geeignet herausgestellt hat.

Um eine stoffschlüssige Verbindung zwischen der Lichtscheibe und dem Leuchtengehäuse durch Laserschweissen herstellen zu können, ist um die durch einen umlaufenden Rand begrenzte Lichtaustrittsöffnung des Leuchtengehäuses herum eine Randfläche vorgesehen, welche eine von dem Rand aufgespannte Fläche fortführt.

Diese Randfläche ist im einfachsten Fall durch eine Stirnseite einer die Lichtaustrittsöffnung umgebenden Wandung des Leuchtengehäuses gebildet. Alternativ oder zusätzlich kann die Randfläche eine einen flanschartigen Fortsatz, Vorsprung oder Überstand bildende Auskragung umfassen, die beispielsweise von einer zur Lichtaustrittsöffnung führenden Wandung des Leuchtengehäuses, beispielsweise einer Seitenwand des Leuchtengehäuses nach innen, zur Lichtaustrittsöffnung hin, oder nach außen, von der Lichtaustrittsöffnung weg orientiert ist, beispielsweise absteht. Die Auskragung kann hierbei bündig mit einer Stirnseite einer die Lichtaustrittsöffnung umgebenden Wandung des Leuchtengehäuses abschließen, beispielsweise nach innen, zur Lichtaustrittsöffnung hin, und/oder außen von der Lichtaustrittsöffnung weg in der Art einer Ausweitung einer Stirnseite einer die Lichtaustrittsöffnung umgebenden Wandung des Leuchtengehäuses ausgebildet sein, oder sie kann, nach innen zur Lichtaustrittsöffnung hin orientiert, tieferliegend näher zum Leuchteninnenraum hin unterhalb einer Stirnseite einer die Lichtaustrittsöffnung umgebenden Wandung des Leuchtengehäuses angeordnet sein. Auch sind abschnittsweise unterschiedliche Ausgestaltungen der Randfläche und Orientierungen eines die Randfläche zumindest teilweise bildenden Fortsatzes möglich.

Grundsätzlich kann die Randfläche von einem Süll umgeben sein, das eine auf die Randfläche aufgelegte Lichtscheibe an deren Außenumfang umgibt. In der bereits beschriebenen Ausgestaltungsform einer durch eine Auskragung gebildeten Randfläche, die nach innen zur Lichtaustrittsöffnung hin orientiert, tieferliegend unterhalb einer Stirnseite einer die Lichtaustrittsöffnung umgebenden Wandung des Leuchtengehäuses angeordnet ist, kann die die Randfläche überragende Wandung des Leuchtengehäuses das Süll bilden. Auch hier sind abschnittsweise unterschiedliche Ausgestaltungen möglich.

Auch die Lichtscheibe ist zumindest in einem beispielsweise umlaufenden Randbereich entsprechend geformt und führt zumindest dort, wo der Randbereich der Lichtscheibe auf der Randfläche des Leuchtengehäuses aufliegt, die von dem die Lichtaustrittsöffnung umgebenden Rand aufgespannte Fläche fort. Sie kann über einen äußeren Umfang der Randfläche hinaus weiterführend ausgebildet sein, oder sie kann am äußeren Umfang der Randfläche enden oder kleiner als der äußere Umfang der Randfläche, jedoch größer als die vom umlaufenden Rand begrenzte Lichtaustrittsöffnung ausgebildet sein. Auch bei der Lichtscheibe sind abschnittsweise unterschiedliche Ausgestaltungen möglich.

Wichtig ist hervorzuheben, dass der Randbereich keinesfalls außen um die dem Leuchteninnenraum zugewandte Innenseite der Lichtscheibe umlaufend ausgebildet sein muss, sondern der Randbereich ein- oder mehrseitig beispielsweise leicht nach zum Zentrum der Lichtscheibe hin verrückt sein kann. Demnach kann die Lichtscheibe in Bezug auf die Lichtaustrittsöffnung und eine diese umgebende Randfläche in Übermaß hergestellt sein.

Für die Herstellung einer hinsichtlich Schweissnahtfestigkeit, Dichtheit und - weil beispielsweise durch die Lichtscheibe hindurch sichtbar - optische Anmutung optimale Laserschweissverbindung zwischen Lichtscheibe und Leuchtengehäuse ist es erforderlich, dass die miteinander zu verbindenden Teile in einer zwischen dem Randbereich der Lichtscheibe und der Randfläche des Leuchtengehäuses ausgebildeten Schweisszone ganzflächig zueinander anliegen und somit kein Spalt, der eine Laserverschweissung unmöglich machen würde, vorhanden ist, und nach Möglichkeit die gesamte zur Verfügung stehende Schweissfläche verschweisst wird, um die optimale Schweissnahtfestigkeit einhergehend mit einer optimalen Dichtheit zu erreichen.

Um dies zu erreichen ist es erforderlich, das Leuchtengehäuse und die dessen Lichtaustrittsöffnung abschließende Lichtscheibe während des Laserschweissvorgangs so zu positionieren und zu halten, dass der zum Laserverschweissen mit der Randfläche des Leuchtengehäuses vorgesehene Randbereich der Lichtscheibe und der Randfläche des Leuchtengehäuses einander exakt überdecken.

Grundsätzlich erfolgt die gegenseitige Positionierung miteinander durch Laserschweissen zu verbindender Bauteile über die Gestaltung der Schweisswerkzeugaufnahmen.

Die durch einen Laserschweissvorgang miteinander zu verbindenden und für die gegenseitige Positionierung in den Schweisswerkzeugaufnahmen maßgebenden Bauteile Leuchtengehäuse und Lichtscheibe einer Fahrzeugleuchte unterliegen in der Herstellung prozessbedingten Toleranzen.

Die Schweisswerkzeugaufnahmen, in welche die zu fügenden Bauteile eingelegt und/oder in welchen die zu fügenden Bauteile vor und während dem Laserschweissvorgang gehalten werden, sind demgegenüber auf ein vorgegebenes Nennmaß ausgelegt.

Dimensionale Unterschiede sind als eine Hauptursache für nicht zufriedenstellende Ergebnisse bei der Herstellung von Laserschweissverbindungen zwischen Lichtscheibe und Leuchtengehäuse von Fahrzeugleuchten identifiziert, wie beispielsweise mangelhafte Abdichtung und/oder unsauberes Schweissbild.

Begründet ist dies dadurch, dass dimensionale Unterschiede von Bauteil zu Bauteil durch die starren Schweisswerkzeugaufnahmen nicht ausgeglichen werden können. Dies betrifft sowohl dimensionale Unterschiede von Leuchtengehäusen und von Lichtscheiben, mit denen aufeinanderfolgend umgegangen wird, als auch dimensionale Unterschiede innerhalb von Paarungen miteinander zu verbindender Lichtscheiben und Leuchtengehäuse.

Dadurch ist eine gegenseitige, zur Herstellung einer Laserschweissverbindung erforderliche, möglichst optimale gegenseitige Positionierung des Randbereichs der Lichtscheibe gegenüber der Randfläche des Leuchtengehäuses während des Laserschweissvorgangs nicht prozesssicher gewährleistet. Darüber hinaus ist die Wahrscheinlichkeit hoch, dass die zum Erhalt einer einwandfreien Laserschweissverbindung erforderlichen Voraussetzungen nicht erfüllt sind.

Im Gegenteil steht zu befürchten, dass die miteinander zu verbindenden Teile in einer zwischen dem Randbereich der Lichtscheibe und der Randfläche des Leuchtengehäuses ausgebildeten Schweisszone nicht ganzflächig zueinander anliegen und somit zumindest abschnittsweise ein Spalt vorhanden ist, der in den betroffenen Abschnitten eine Laserverschweissung unmöglich macht. Ferner ist es sehr wahrscheinlich, dass auch in den verbleibenden Abschnitten nicht die gesamte zur Verfügung stehende Schweissfläche verschweisst wird, wodurch selbst in den verbleibenden Abschnitten weder eine optimale Schweissnahtfestigkeit, noch eine optimalen Dichtheit erreicht wird.

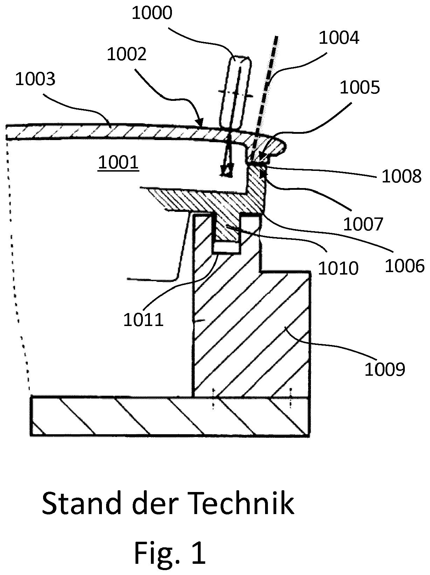

Um die beschriebenen Nachteile wenigstens teilweise zu umgehen ist bekannt, wie in Fig. 1 schematisch in einem Querschnitt dargestellt eine Andrückrolle 1000 vorzusehen, welche auf die dem Leuchteninnenraum 1001 abgewandte Außenseite 1002 der Lichtscheibe 1003 aufgesetzt und unter einer in Fig. 1 durch nicht näher bezeichnete Pfeile für Normal- und Tangentialkraft sowie resultierende Kraft angedeuteten Anpresskraft synchron mit einem den Schweissvorgang ausführenden Laserstrahl 1004 auf der Außenseite 1002 der Lichtscheibe 1003 beispielsweise parallel zur zwischen der Randfläche 1005 des in einer Schweisswerkzeugaufnahme 1009 gehaltenen Leuchtengehäuses 1006 und dem Randbereich 1007 der Lichtscheibe 1003 durch den Schweissvorgang auszubildenden Schweisszone 1008 entlang geführt wird. Zur Aufnahme in der Schweisswerkzeugaufnahme 1009 kann am Leuchtengehäuse 1006 beispielsweise eine Fangrippe 1010 vorgesehen sein, mit der das Leuchtengehäuse 1006 in eine korrespondierende Nut 1011 an der Schweisswerkzeugaufnahme 1009 eingreift. Grundsätzlich ist alternativ oder zusätzlich zu der geschilderten Möglichkeit, eine Andrückrolle 1000 unter einer Anpresskraft synchron mit dem Laserstrahl 1004 auf der Außenseite 1002 der Lichtscheibe 1003 parallel zur Schweisszone 1008 entlang zu führen denkbar, dass eine oder mehrere Andrückrollen 1000 dem Laserstrahl 1004 voraus- und/oder nacheilend entlang der zwischen der Randfläche 1005 des Leuchtengehäuses 1006 und dem Randbereich 1007 der Lichtscheibe 1003 durch den Schweissvorgang auszubildenden Schweisszone 1008 geführt werden.

Die Schweisswerkzeugaufnahme 1009 ist hierbei entsprechend einem auch als Nullmaß bezeichneten Nennmaß des aufzunehmenden oder zu haltenden Bauteils - hier dem Leuchtengehäuse 1006 - hergestellt. Dies führt bei einem Bauteil mit dimensionalen Unterschieden gegenüber dem Nennmaß dazu, dass es unter Verzug in der Schweisswerkzeugaufnahme 1009 gehalten wird, wie in Fig. 1 für ein ein Übermaß aufweisendes Bauteil durch leichte Schrägstellung des Leuchtengehäuses 1006 angedeutet.

Durch ihre Anpresskraft stellt die Andrückrolle 1000 auch bei dimensionalen Unterschieden sicher, dass die Randfläche 1005 des Leuchtengehäuses 1006 und der Randbereich 1007 der Lichtscheibe 1003 in der durch Einwirkung des Laserstrahls 1004 während des Schweissvorgangs herzustellenden Schweisszone 1008 spaltfrei aneinander anliegen.

Nachteilig hieran ist jedoch, dass die Andrückrolle 1000 nicht sicherstellen kann, dass die Randfläche 1005 des Leuchtengehäuses 1006 und der Randbereich 1007 der Lichtscheibe 1003 in der durch Einwirkung des Laserstrahls 1004 während des Schweissvorgangs herzustellenden Schweisszone 1008 vollflächig miteinander verschweisst werden, wodurch weiterhin nicht die gesamte zur Verfügung stehende Schweissfläche verschweisst wird und auch nicht eine optimale Schweissnahtfestigkeit erreicht wird.

Dies ist dadurch bedingt, dass wie in Fig. 1 angedeutet über- und unterdimensionierte Bauteile unter Verzug in der Schweisswerkzeugaufnahme 1009 aufgenommen und/oder gehalten werden, wodurch die in einem in Fig. 1 dargestellten Querschnitt gesehen der Neigung und/oder Schrägstellung entsprechenden Ausrichtung der Randfläche 1005 des Leuchtengehäuses 1006 eine andere ist, als die Ausrichtung des Randbereichs 1007 der Lichtscheibe 1003.

Um diesem Nachteil zu begegnen ist bekannt, mehrere Schweisswerkzeugaufnahmen für mehrere, auf kleinstmögliche dimensionale Unterschiede sortierte Gruppen gleichartiger Bauteile zu verwenden, oder eine Schweisswerkzeugaufnahme vorzusehen, die durch Umbau manuell an verschiedene auf kleinstmögliche dimensionale Unterschiede sortierte Gruppen gleichartiger Bauteile angepasst werden kann, um so nacheinander mit Bauteilen verschiedener Gruppen umzugehen.

Ein selbst durch die genannten Maßnahmen weiterhin bestehender Nachteil ist, dass durch die Krafteinwirkung der Andrückrolle in dem ungünstigen Fall, bei dem ein in einer Schweisswerkzeugaufnahme gehaltenes oder zu haltendes Bauteil größere und/oder kleinere Dimensionen aufweist, als diese die Schweisswerkzeugaufnahme toleriert, ein Zwangsfügen der beteiligten Bauteile mit entsprechender, undefinierbarer Deformation der Schweisszone oder eines angrenzenden Bereichs erfolgt, wie etwa einer die Lichtaustrittsöffnung umgebende Wandung des Leuchtengehäuses.

Ein damit einhergehender, weiterer Nachteil besteht darin, dass die durch das Zwangsfügen der Bauteile an der so hergestellten Fahrzeugleuchte entstandenen Deformationen durch den vermittels des Laserschweissvorgangs stattgefundenen Schweissprozess dauerhaft fixiert werden. Dies hat einerseits einen erhöhten Aufwand bei der späteren Montage der Fahrzeugleuchten in entsprechenden Einbauöffnungen in Karosserien von Fahrzeugen zur Folge, da die Deformationen sich auf die räumliche Position der zur Montage vorgesehenen Befestigungspunkte auswirken.

Ein zusätzlicher Nachteil besteht darin, dass nach der Entnahme einer zuvor zwangsgefügten Bauteilepaarung aus den Schweisswerkzeugaufnahmen die fixierten Deformationen als Spannungskräfte auf die Schweissnaht wirken.

Sind diese Kräfte entsprechend groß, kann dies - auch mit zeitlicher Verzögerung - zu einem Versagen der Schweissnaht führen.

Zusammengefasst wird zum Laserschweissen von Lichtscheibe und Leuchtengehäuse einer Fahrzeugleuchte bislang das Leuchtengehäuse mit rückseitig des Leuchtengehäuses über dessen Umfang verteilt angeordneten Fangrippen in eine Schweisswerkzeugaufnahme eingelegt. Die Schweisswerkzeugaufnahme besteht aus ausgehend von einem Ursprung an festen Positionen angeordneten Elementen, welche mit den Fangrippen korrespondieren. Die Positionen der Elemente, die sich fern des Ursprungs befinden, sind durch Sollmaße fest vorgegeben. Anschließend wird die Lichtscheibe ebenfalls ausgehend vom Ursprung, beispielsweise unter Anlegen mit einer Lichtscheibenkante an einem einseitigen oder mit zwei benachbarten Lichtscheibenkanten an einem zweiseitigen Festanschlag auf der um die Lichtaustrittsöffnung umlaufenden, beispielsweise durch eine Stirnseite einer Wandung des Leuchtengehäuses gebildeten Randfläche vorderseitig des Leuchtengehäuses aufgelegt.

Die Herstellung der Laserschweissverbindung zwischen der beispielsweise umlaufenden Randfläche und dem nach dem Auflegen der Randfläche gegenüberliegenden Randbereich der Lichtscheibe erfolgt schließlich durch Abfahren einer festen Kontur mittels eines durch die Lichtscheibe hindurch auf die Randfläche gerichteten Laserstrahls, während gleichzeitig eine gemeinsam mit dem Laserstrahl fortbewegte Andrückrolle lokal nahe einem Schweissort, an dem momentan der Laserstrahl auf die Lichtscheibe und die hinter dieser befindliche Schweisszone gerichtet ist, die Lichtscheibe auf die Randfläche drückt.

Nachteilig hieran ist, dass aufgrund von Bauteiltoleranzen lokal nur linienförmige Schweissverbindungen auftreten, im schlimmsten Fall lokal sogar überhaupt keine Schweissverbindung zu Stande kommt, weil der Gehäuserand und die Rückseite der Lichtscheibe am Schweissort nur in Linienkontakt stehen oder gar auseinanderklaffen. Dies führt zu verringerter Schweissnahtfestigkeit und/oder -dichtheit.

Durch WO 2011/138568 A1 ist eine Vorrichtung zur Verbindung von aus Kunststoffen hergestellten Fahrzeugbauteilen durch Laserschweissen bekannt, einem oberen, transparenten Fahrzeugbauteil und einem unteren, absorbierenden Fahrzeugbauteil. Die Vorrichtung umfasst eine Schweisswerkzeugaufnahme für ein unteres Fahrzeugbauteil, Mittel zur Ausrichtung des unteren Fahrzeugbauteils gemeinsam mit dem oberen Fahrzeugbauteil gegenüber der Schweisswerkzeugaufnahme, zumindest jedoch gegenüber einer sich mindestens entlang der Z-Achse erstreckenden Bezugslinie, unter gleichzeitiger Halterung oder Aufnahme in der Schweisswerkzeugaufnahme, Mittel zur Erzeugung einer Anpresskraft zwischen dem unteren Fahrzeugbauteil und dem oberen Fahrzeugbauteil, und Mittel zur Erzeugung und zum Richten und Führen eines Laserstrahls auf eine und entlang einer zwischen dem in der Schweisswerkzeugaufnahme gehaltenen oder aufgenommenen unteren Fahrzeugbauteil und dem oberen Fahrzeugbauteil auszubildenden Schweisszone. Die Mittel zur Erzeugung einer Anpresskraft zwischen dem unteren Fahrzeugbauteil und dem oberen Fahrzeugbauteil sind durch eine konzentrisch um den Laserstrahl angeordnete Hülse ausgebildet, die von oben auf das obere Fahrzeugbauteil drückt, sowie federelastische gegenhaltende bewegliche Elemente.

Durch WO 2011/138567 A1 ist eine Vorrichtung zur Verbindung von aus Kunststoffen hergestellten Fahrzeugbauteilen durch Laserschweissen bekannt, einem oberen, transparenten Fahrzeugbauteil und einem unteren, absorbierenden Fahrzeugbauteil. Die Vorrichtung umfasst eine Schweisswerkzeugaufnahme für ein unteres Fahrzeugbauteil, Mittel zur Ausrichtung des unteren Fahrzeugbauteils gemeinsam mit dem oberen Fahrzeugbauteil gegenüber der Schweisswerkzeugaufnahme unter gleichzeitiger Halterung oder Aufnahme in der Schweisswerkzeugaufnahme, Mittel zur Erzeugung einer Anpresskraft zwischen dem unteren Fahrzeugbauteil und dem oberen Fahrzeugbauteil, und Mittel zur Erzeugung und zum Richten und Führen eines Laserstrahls auf eine und entlang einer zwischen dem in der Schweisswerkzeugaufnahme gehaltenen oder aufgenommenen unteren Fahrzeugbauteil und dem oberen Fahrzeugbauteil auszubildenden Schweisszone. Die Mittel zur Erzeugung einer Anpresskraft zwischen dem unteren Fahrzeugbauteil und dem oberen Fahrzeugbauteil sind durch eine Vielzahl von Fingern gebildet, die von außen über den Rand des oberen Fahrzeugbauteils drücken, sowie federelastische gegenhaltende bewegliche Elemente.

Durch FR 3 020 585 A1 ist ein Laserschweißkopf bekannt.

Durch Rene Geiger et al: "Hybridschweißen von Kunststoffen - Durch den kombinierten Einsatz von Laserstrahlung und Heizstrahlung beim Schweißprozess eröffnen sich völlig neue Anwendungsfelder Hybrid Welding of Plastics - The Combined Utilisation of Laser Radiation and Heating Radiation During the Weld", Joining Plastics 2/07, 1. Januar 2007, pp 144-152; XP055257824 ist bekannt, Laserhybridschweißtechnik zur Verbindung von Lichtscheiben und Leuchtengehäusen von Fahrzeugleuchten vorzusehen.

Durch DE 10 2006 053 044 A1 ist eine Vorrichtung zum Laserschweißen eine optischen Bauteils und eines Trägers für dieses einer Fahrzeugleuchte bekannt. Dabei wird während des Plastifizierungsvorgangs das optische Bauteils gegenüber dem Träger automatisiert anhand optischer Justierdaten eingestellt und anschließend unlösbar verbunden.

Durch KR 2010 0029975 ist eine Vorrichtung zum Lasersimultanlaserschweißen bekannt.

Durch DE 10 2013 217 647 A1 und durch DE 10 2012 216 664 A1 sind Vorrichtungen zur Verbindung von aus Kunststoffen hergestellten Bauteilen durch Laserschweissen bekannt.

Durch DE 10 2013 220 497 A1 ist eine Spannvorrichtung für stoffschlüssig miteinander zu verbindende Bauteile bekannt. Die Spannvorrichtung umfasst entlang einer herzustellenden Verbindungsnaht der miteinander zu verbindenden Bauteile angeordnete Spannsegmente.

Durch DE 10 2007 042 739 A1 ist eine Vorrichtung zur Verbindung von aus Kunststoffen hergestellten Bauteilen durch Laserschweissen bekannt. Die Vorrichtung umfasst ein Spannwerkzeug mit Innen-Spannbacken.

Eine Aufgabe der Erfindung ist es, ein verbessertes Verfahren und eine verbesserte Vorrichtung zur Verbindung von Lichtscheibe und Leuchtengehäuse von Fahrzeugleuchten durch Laserschweissen anzugeben, mit denen sich nicht nur Lichtscheiben und Leuchtengehäuse mit dimensionalen Unterschieden innerhalb eng gesetzter, auf starre Schweisswerkzeugaufnahmen abgestimmter Grenzen verbinden lassen, sondern ganz allgemein Lichtscheiben und Leuchtengehäuse mit dimensionalen Unterschieden innerhalb von beispielsweise durch deren Herstellungsprozess - insbesondere des Spritzgießens - gegebenen Toleranzgrenzen unter Sicherstellung einer spaltfreien gegenseitigen Anlage innerhalb einer zwischen einem Randbereich der Lichtscheibe und einem Randfläche des Leuchtengehäuses ausgebildeten Schweisszone, welche eine Laserverschweissung der gesamten zur Verfügung stehenden, durch eine ganzflächige Überlappung von Randbereich und Randfläche gebildeten Schweissfläche einhergehend mit maximaler Schweissnahtfestigkeit und Dichtheit gewährleistet.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach ein Verfahren zur Verbindung von Lichtscheibe und Leuchtengehäuse aus Kunststoffen von Fahrzeugleuchten durch Laserschweissen.

Das Verfahren sieht vor, ein aus einem Kunststoff hergestelltes Leuchtengehäuse in einer Schweisswerkzeugaufnahme an einem gegenüber einem Ursprung ortsfesten Nullpunkt fest und an wenigstens einem von dem Nullpunkt entfernten Halte- oder Aufnahmepunkt schwimmend gelagert zu halten oder aufzunehmen.

Aufgrund der festen Lagerung am Nullpunkt und die schwimmende Lagerung an allen verbleibenden Halte- oder Aufnahmepunkten erfährt das Leuchtengehäuse unabhängig davon, ob es dimensionale Unterschiede zu einem Nennmaß aufweist, oder nicht, keinerlei Verzug durch die Schweisswerkzeugaufnahme.

Das Verfahren sieht anschließend vor, die ebenfalls aus einem Kunststoff hergestellte Lichtscheibe beispielsweise ausgehend vom Ursprung oder vom Nullpunkt gegenüber einer Randfläche des Leuchtengehäuses, welche eine von einem eine Lichtaustrittsöffnung des Leuchtengehäuses begrenzenden, umlaufenden Rand aufgespannte Fläche fortführt, auszurichten und mit einem beispielsweise um die Lichtscheibe umlaufenden Randbereich, der mit der die von dem Rand aufgespannte Fläche fortführenden Randfläche korrespondierend ausgestaltet ist, auf die Randfläche aufzulegen.

Das Verfahren sieht dann vor, die Lichtscheibe zumindest in dem Randbereich auf die Randfläche anzudrücken und einen den Laserschweissvorgang ausführenden Laserstrahl vorzugsweise durch die Lichtscheibe hindurch auf eine zwischen der Randfläche des in einer Schweisswerkzeugaufnahme gehaltenen oder aufgenommenen Leuchtengehäuses und dem Randbereich der Lichtscheibe durch den Laserschweissvorgang auszubildende Schweisszone zu richten und den Laserstrahl entlang der Schweisszone um die Lichtaustrittsöffnung zu führen.

Schließlich sieht das Verfahren vor, das mit der Lichtscheibe nunmehr durch Laserschweissen entlang der Schweisszone dicht und fest verbundene Leuchtengehäuse aus der Schweisswerkzeugaufnahme zu entnehmen.

Im Anschluss hieran kann erneut mit der Herstellung einer weiteren Laserschweissverbindung zwischen einem weiteren Leuchtengehäuse und einer weiteren Lichtscheibe begonnen werden, indem das Verfahren erneut ausgeführt wird.

Das Verfahren kann vorsehen, dass das Andrücken der Lichtscheibe zumindest in dem Randbereich auf die Randfläche des Leuchtengehäuses durch Erzeugung eines Unterdrucks in einem durch die Lichtscheibe zu verschließenden Leuchteninnenraum gegenüber einem außerhalb des Leuchteninnenraums herrschenden Umgebungsdruck erfolgt.

Das Verfahren kann alternativ oder zusätzlich vorsehen, dass das Andrücken der Lichtscheibe zumindest in dem Randbereich auf die Randfläche des Leuchtengehäuses durch eine lokale Anpresskraft erfolgt, deren Einwirkungsbereich synchron mit dem Laserstrahl entlang und/oder parallel zur Schweisszone mitbewegt ist.

Beispielsweise kann das Andrücken der Lichtscheibe zumindest in dem Randbereich auf die Randfläche des Leuchtengehäuses durch eine oder mehrere auf einer einem durch die Lichtscheibe zu verschließenden Leuchteninnenraum abgewandten Außenseite der Lichtscheibe abrollende, synchron mit dem Laserstrahl entlang und/oder parallel zur Schweisszone mitbewegte Andrückrollen erfolgen.

Das Verfahren kann beispielsweise vorsehen, die Lichtscheibe ebenfalls am Ursprung auszurichten, bevor oder während sie auf das Leuchtengehäuse aufgelegt wird.

Das Verfahren kann vorsehen, am Leuchtengehäuse mehrere Fangrippen vorzusehen, mit denen das Leuchtengehäuse am gegenüber dem Ursprung fest positionierten Nullpunkt und an dem wenigstens einen von dem Nullpunkt entfernten, schwimmend gelagerten Halte- oder Aufnahmepunkt von der Schweisswerkzeugaufnahme gehalten oder aufgenommen wird.

Das Verfahren kann vorsehen, die Schweisswerkzeugaufnahme in mehrere Elemente zu unterteilen, von denen eins fest positioniert ist und den Ursprung und/oder den Nullpunkt bildet, und die verbleibenden schwimmend gelagert sind und die verbleibenden, von dem Nullpunkt entfernten, schwimmend gelagerten Halte- oder Aufnahmepunkte bilden.

Das Verfahren kann einleitend vorsehen, Paarungen von Leuchtengehäuse und Lichtscheibe mit geringstmöglichen dimensionalen Unterschieden zusammenzustellen. Hierdurch werden sich durch Größenunterschiede der miteinander durch Laserschweissen zu verbindenden Leuchtengehäuse und Lichtscheiben ergebende Abweichungen in der Lage der Schweisszonen vermieden und darüber hinaus eine noch höhere Schweissnahtfestigkeit erreicht, da durch die Zuordnung zu Paaren eine großflächigere gegenseitige Anlage von Randfläche und Randbereich erhalten wird.

Die Erfindung kann demnach verwirklicht sein durch ein Zulassen von toleranzausgleichenden Bewegungen im Schweisswerkzeug beziehungsweise in der Schweisswerkzeugaufnahme.

Sich hierdurch ergebende Vorteile sind unter Anderem eine gleichzeitig reduzierte Dauer-Spannungsbelastung der Schweissnaht und damit einhergehend eine konstante, erhöhte Schweissnahtqualität.

Ein zweiter Gegenstand der Erfindung betrifft eine zur Durchführung eines zuvor beschriebenen Verfahrens geeignete Vorrichtung zur Verbindung von aus Kunststoffen hergestellten Lichtscheiben und Leuchtengehäusen von Fahrzeugleuchten durch Laserschweissen.

Die Vorrichtung weist eine Schweisswerkzeugaufnahme für ein Leuchtengehäuse auf.

Die Vorrichtung umfasst Mittel zur Ausrichtung des Leuchtengehäuses gegenüber einem Ursprung unter gleichzeitiger Halterung oder Aufnahme in der Schweisswerkzeugaufnahme.

Der Ursprung definiert einen realen oder fiktiven Punkt oder einen realen oder fiktiven Anschlag, gegenüber dem das Leuchtengehäuse bei seiner Halterung durch oder seiner Aufnahme in die Schweisswerkzeugaufnahme ausgerichtet wird.

Die Vorrichtung umfasst außerdem Mittel zur Erzeugung einer Anpresskraft einer mit einem beispielsweise umlaufend ausgebildeten Randbereich auf einer Randfläche des Leuchtengehäuses aufliegenden Lichtscheibe.

Die Randfläche des Leuchtengehäuses führt eine von einem eine Lichtaustrittsöffnung des Leuchtengehäuses begrenzenden, umlaufenden Rand aufgespannte Fläche fort.

Der Randbereich der Lichtscheibe ist mit der die von dem Rand aufgespannte Fläche fortführenden Randfläche korrespondierend ausgestaltet.

Die Vorrichtung umfasst darüber hinaus Mittel zur Erzeugung und zum Richten und Führen eines Laserstrahls auf eine und entlang einer zwischen der Randfläche des in der Schweisswerkzeugaufnahme gehaltenen oder aufgenommenen Leuchtengehäuses und dem Randbereich der Lichtscheibe durch einen Laserschweissvorgang herrschenden oder auszubildenden Schweisszone.

Die Vorrichtung zeichnet sich durch Mittel aus, mit denen das Leuchtengehäuse am Ursprung oder allgemeiner an einem gegenüber diesem ortsfesten Nullpunkt fest von der Schweisswerkzeugaufnahme aufgenommen oder gehalten wird, sowie durch Mittel, mit denen das Leuchtengehäuse an vom Ursprung entfernten Halte- oder Aufnahmepunkten schwimmend gegenüber dem Ursprung gelagert ist.

Beispielsweise können die Mittel, mit denen das Leuchtengehäuse an vom Ursprung entfernten Halte- oder Aufnahmepunkten schwimmend gegenüber dem Ursprung gelagert ist, Nuten und/oder Vorsprünge an der Schweisswerkzeugaufnahme umfassen, in welchen das Leuchtengehäuse gegenüber der Schweisswerkzeugaufnahme in Richtung einer Längserstreckung der Nuten und/oder Vorsprünge mittels am Leuchtengehäuse beispielsweise eigens hierfür vorgesehener Rippen und/oder Ausnehmungen relativ zum Ursprung verschiebbar aufgenommen oder gehalten wird.

Vorzugsweise zeichnet sich die Vorrichtung dadurch aus, dass die Mittel, mit denen das Leuchtengehäuse an vom Ursprung entfernten Halte- oder Aufnahmepunkten schwimmend gegenüber dem Ursprung gelagert ist, durch eine Untergliederung der Schweisswerkzeugaufnahme in mehrere Elemente ausgebildet sind, von denen ein einen Ursprung bildendes oder im Ursprung angeordnetes erstes Element ortsfest und die verbleibenden Elemente zumindest relativ zum ersten Element verschiebbar schwimmend gelagert sind, beispielsweise in gerader Richtung auf das erste Element zu und/oder von diesem weg.

Der Laserstrahl ist vorzugsweise während des gesamten Laserschweissvorgangsdurch die Lichtscheibe hindurch auf die Schweisszone gerichtet.

Die Mittel zur Erzeugung einer Anpresskraft der mit ihrem Randbereich auf der Randfläche des Leuchtengehäuses aufliegenden Lichtscheibe können eine oder mehrere auf einer einem durch die Lichtscheibe zu verschließenden Leuchteninnenraum abgewandten Außenseite der Lichtscheibe abrollende, synchron mit dem Laserstrahl entlang und/oder parallel zur Schweisszone mitbewegte Andrückrollen umfassen.

Die Schweisswerkzeugaufnahme kann Nuten und/oder Vorsprünge für korrespondierende Rippen und/oder Ausnehmungen am Leuchtengehäuse aufweisen. Durch ein Zusammenwirken der Nuten und/oder Vorsprünge der Schweisswerkzeugaufnahme und der Rippen und/oder Ausnehmungen am Leuchtengehäuse wird das Leuchtengehäuse gegenüber dem Ursprung ausgerichtet und von der Schweisswerkzeugaufnahme am Ursprung aufgenommen und/oder gehalten und kann an vom Ursprung entfernten Halte- oder Aufnahmepunkten gegenüber dem Ursprung schwimmend gelagert aufgenommen und/oder gehalten sein, oder es kann an vom Ursprung entfernten Halte- oder Aufnahmepunkten von gegenüber dem Ursprung schwimmend gelagerten Elementen der Schweisswerkzeugaufnahme aufgenommen oder gehalten werden.

Es ist ersichtlich, dass die Erfindung zur Lösung der gestellten Aufgabe unter Beseitigung der Nachteile des Standes der Technik eine in mehrere Elemente untergliederte Schweisswerkzeugaufnahme vorsieht, von denen ausgehend von einem oder zwei, allgemein wenigen Elementen im oder nahe des Ursprungs die verbleibenden Elemente innerhalb einer beispielsweise parallel zu einer von einem Gehäuserand aufgespannten Fläche verlaufenden Ebene in zumindest jeweils einer Richtung beweglich angeordnet sind. Hierdurch ergibt sich eine feste Lagerung des Leuchtengehäuses am Ursprung und eine schwimmende Lagerung des Leuchtengehäuses in den verbleibenden Abschnitten. Dadurch kommt es zu keinem Verzug des Leuchtengehäuses, der hauptursächlich ist für die bestehenden Nachteile des Standes der Technik. Die Anordnung und Verschweissung der Lichtscheibe kann wie beim Stand der Technik erfolgen, wobei durch die nunmehr schwimmende Lagerung des Leuchtengehäuses dessen Verzug verhindert wird, der sich beim Stand der Technik zu Linienkontakt und Auseinanderklaffen zwischen Gehäuserand und Lichtscheibe in der Schweisszone summiert. Dadurch, dass nunmehr der Randbereich der Lichtscheibe und die Randfläche des Leuchtengehäuses flächig aneinander anliegen können, wird eine größere Schweissnahtfestigkeit und/oder -dichtheit erzielt.

Es ist ebenso ersichtlich, dass die Erfindung mit nur einer Schweisswerkzeugaufnahme für Lichtscheiben und/oder Leuchtengehäuse mit dimensionalen Unterschieden innerhalb von beispielsweise durch deren Herstellungsprozess - insbesondere des Spritzgießens - gegebenen Toleranzgrenzen auskommt und nicht wie beim Stand der Technik für Gruppen mit geringen dimensionalen Unterschieden jeweils eigene starre Schweisswerkzeugaufnahmen benötigt werden.

Zusätzliche Vorteile gegenüber dem Stand der Technik sind geringe Herstellungskosten einhergehend mit einer sich kostensenkend auf die Herstellungskosten auswirkenden geringen Ausschussquote.

Die Erfindung ermöglicht eine durch Laserschweissen hergestellte, vollflächige, spaltfreie stoffschlüssige Verbindung zwischen einem Randbereich einer eine Lichtaustrittsöffnung eines Leuchtengehäuses abschließenden Lichtscheibe und einer eine von einem die Lichtaustrittsöffnung des Leuchtengehäuses begrenzenden, umlaufenden Rand aufgespannte Fläche fortführenden Randfläche des Leuchtengehäuses, die neben einer mechanischen Verbindung der Bauteile Lichtscheibe und Leuchtengehäuse zugleich einen dichten Abschluss des Bauteilübergangs an der Grenze zwischen den zu verbindenden Bauteilen nach sich zieht.

Die Vorrichtung kann einzelne oder eine Kombination der zuvor und/oder nachfolgend in Verbindung mit dem Verfahren beschriebene Merkmale aufweisen, ebenso wie das Verfahren einzelne oder eine Kombination mehrerer zuvor und/oder nachfolgend in Verbindung mit der Vorrichtung beschriebene Merkmale aufweisen und/oder verwirklichen kann.

Die Vorrichtung kann ebenso wie das Verfahren alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Bei jedem Laserschweissvorgang wird unabhängig von den vorliegenden, im Rahmen des zugelassenen Toleranzfeldes liegenden dimensionalen Abmessungen der beteiligten Bauteile Leuchtengehäuse und Lichtscheibe ein optimierter Sitz des beteiligten Leuchtengehäuses und der beteiligten Lichtscheibe und somit eine kontinuierliche Schweissnahtqualität erhalten.

Deformationen sowohl der beteiligten Bauteile Leuchtengehäuse und Lichtscheibe, als auch der fertigen, durch die Laserschweissverbindung zwischen Leuchtengehäuse und Lichtscheibe hergestellten Fahrzeugleuchten werden verringert.

In Folge einer Verringerung der auftretenden und durch das Laserschweissen manifestierten Deformationen im Vergleich zum Stand der Technik treten geringere Dauer-Spannungsbelastung in der Schweissnaht auf.

Die Wahrscheinlichkeit eines Auftretens einer Laserschweissverbindung, welche die an Fahrzeugleuchten gestellten Qualitätsanforderungen nicht erfüllt, wird erheblich verringert.

Darüber hinaus entfallen chargenbezogene Einstellarbeiten an den Schweisswerkzeugaufnahmen.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: eine einleitend zum Stand der Technik beschriebene Vorrichtung zur Verbindung von aus Kunststoffen hergestellten Lichtscheiben und Leuchtengehäusen von Fahrzeugleuchten durch Laserschweissen gemäß dem Stand der Technik in einem Querschnitt.
- Fig. 2: ein erstes Ausführungsbeispiel einer erfindungsgemäßen Vorrichtung zur Verbindung von aus Kunststoffen hergestellten Lichtscheiben und Leuchtengehäusen von Fahrzeugleuchten durch Laserschweissen in einer Draufsicht.
- Fig. 3: ein zweites Ausführungsbeispiel einer erfindungsgemäßen Vorrichtung zur Verbindung von aus Kunststoffen hergestellten Lichtscheiben und Leuchtengehäusen von Fahrzeugleuchten durch Laserschweissen in einem Querschnitt entlang der Linie A-A in Fig. 2.

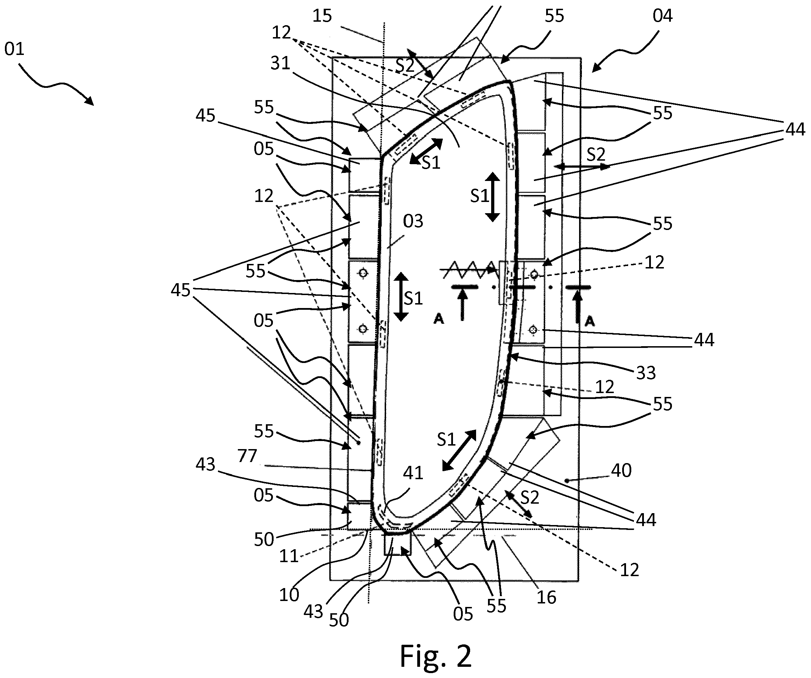

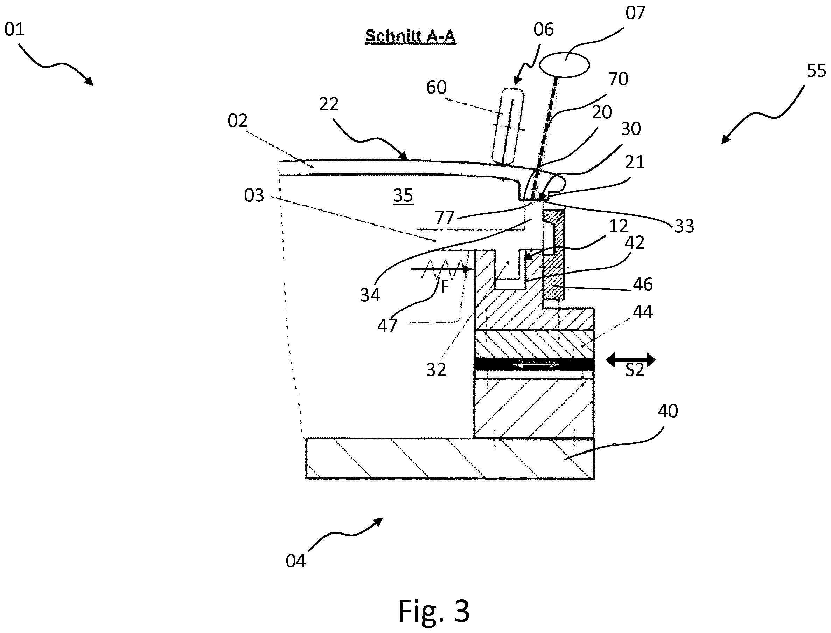

Eine in Fig. 2 und Fig. 3 ganz oder in Teilen dargestellte Vorrichtung 01 zur Verbindung einer aus einem Kunststoff hergestellten Lichtscheibe 02 und einem ebenfalls aus einem Kunststoff hergestellten Leuchtengehäuse 03 durch Laserschweissen zu einer Fahrzeugleuchte umfasst:
- eine Schweisswerkzeugaufnahme 04 für das Leuchtengehäuse 03,
- Mittel 05 zur Ausrichtung des Leuchtengehäuses 03 gegenüber einem Ursprung 10 unter gleichzeitiger Halterung oder Aufnahme in der Schweisswerkzeugaufnahme 04,
- Mittel 06 zur Erzeugung einer Anpresskraft der mit einem beispielsweise umlaufend ausgebildeten Randbereich 20 auf einer Randfläche 30 des Leuchtengehäuses 03 aufliegenden Lichtscheibe 02, wobei die Randfläche 30 des Leuchtengehäuses 03 eine von einem eine Lichtaustrittsöffnung 31 des Leuchtengehäuses 03 begrenzenden, umlaufenden Rand 32 aufgespannte Fläche fortführt, und der Randbereich 20 der Lichtscheibe 02 mit der die von dem Rand 32 aufgespannte Fläche fortführenden Randfläche 30 korrespondierend ausgestaltet ist, und
- Mittel 07 zur Erzeugung und zum Richten und Führen eines Laserstrahls 70 auf eine und entlang einer zwischen der Randfläche 30 des in der Schweisswerkzeugaufnahme 04 gehaltenen oder aufgenommenen Leuchtengehäuses 03 und dem Randbereich 20 der Lichtscheibe 02 durch einen Laserschweissvorgang herrschenden oder auszubildenden Schweisszone 77.

Die Vorrichtung 01 zeichnet sich aus durch Mittel 50, mit denen das Leuchtengehäuse 03 am Ursprung 10 oder allgemeiner an einem gegenüber diesem ortsfesten Nullpunkt 11 fest von der Schweisswerkzeugaufnahme 04 aufgenommen oder gehalten wird, sowie durch Mittel 55, mit denen das Leuchtengehäuse 03 an vom Ursprung 10 entfernten Aufnahme- oder Haltepunkten 12 durch Doppelpfeile S1, S2 in Fig. 2 und Fig. 3 angedeutet schwimmend gegenüber dem Ursprung 10 gelagert ist.

Der Ursprung 10 definiert einen realen oder fiktiven Punkt oder wenigstens einen realen oder fiktiven Anschlag, vorzugsweise den Schnittpunkt zweier einander schneidender Anschlagskanten 15, 16, gegenüber dem das Leuchtengehäuse 03 bei seiner Halterung durch oder seiner Aufnahme in die Schweisswerkzeugaufnahme 04 ausgerichtet wird.

Der Nullpunkt 11 ist ortsfest in Bezug auf den Ursprung 10 möglichst nahe diesem angeordnet, beispielsweise mit dem Ursprung 10 identisch. Nachdem Fahrzeugleuchten im überwiegenden Fall keine scharfen oder spitzen Ecken und Kanten aufweisen, liegt ein durch den Schnittpunkt zweier einander schneidender Anschlagskanten 15, 16 gebildeter Ursprung 10 meist außerhalb einer einer in Fig. 2 gezeigten Draufsicht auf die Lichtaustrittsöffnung 31 entsprechenden senkrechten Projektion einer Fahrzeugleuchte. Daher kann es vorkommen, dass Nullpunkt 11 und Ursprung 10 nicht identisch sind. Um möglichst geringe Toleranzen einer Aufnahme für das Leuchtengehäuse 03 am Nullpunkt 11 bei einer Ausrichtung gegenüber dem Ursprung 10, beispielsweise durch Anlegen an zwei einander schneidende Anschlagskanten 15, 16 vorzusehen, ist es daher vorteilhaft, den Ursprung möglichst nahe dem Ursprung 10 zu platzieren.

Die Schweisswerkzeugaufnahme 04 kann Nuten 41, 42 und/oder Vorsprünge aufweisen, in welche das Leuchtengehäuse 03 mit beispielsweise eigens hierfür vorgesehenen, alternativ oder zusätzlich dessen Versteifung dienenden, korrespondierende Rippen 32 und/oder Ausnehmungen eingreift (Fig. 3).

Sowohl der Nullpunkt 11, als auch die Halte- oder Aufnahmepunkte 12 können eine oder mehrere solche korrespondierende Nuten 41, 42 und/oder Vorsprünge an der Schweisswerkzeugaufnahme 04 und Rippen 32 und/oder Ausnehmungen am Leuchtengehäuse 03 vorsehen.

Beispielsweise kann im Nullpunkt 11 eine U- oder V-förmige Nut 41 an der Schweisswerkzeugaufnahme 04 sowie eine entsprechend geformte, korrespondierende Rippen am Leuchtengehäuse 03 vorgesehen sein, wobei sich die Schenkel der U- oder V-förmigen Nut 41 entlang der Anschlagskanten 15, 16 spreizen. Ebensogut ist denkbar, dass zur Festlegung im Nullpunkt 11 mehrere, beispielsweise zwei, sich parallel zu den Anschlagskanten 15, 16 erstreckende Rippen am Leuchtengehäuse 03 vorgesehen sind. Diese können in eine gemeinsame, beispielsweise U- oder V-förmige, durch den Nullpunkt 11 hindurchführende Nut 41 an der Schweisswerkzeugaufnahme 04 eingreifen, oder in separate, beispielsweise sich linear erstreckende Nuten.

An den Halte- oder Aufnahmepunkten 12 können Nuten 42 an der Schweisswerkzeugaufnahme 04 und mit diesen korrespondierende Rippen 32 am Leuchtengehäuse 03 vorgesehen sein, welche sich in einer in Fig. 2 gezeigten Draufsicht jeweils parallel zu einem Rand 33 des Leuchtengehäuses 03 erstrecken.

Der Vollständigkeit halber sei erwähnt, dass der Übersichtlichkeit halber die Nuten 41 in Fig. 2 nicht dargestellt sind, um die Zeichnung nicht zu überlasten. Die Nuten 41 sind in Fig. 2 durch gestrichelte Bereiche an den Halte- oder Aufnahmepunkten 12 dargestellt.

Durch ein Zusammenwirken der Nuten 41, 42 und/oder Vorsprünge der Schweisswerkzeugaufnahme 04 und der Rippen 32 und/oder Ausnehmungen am Leuchtengehäuse 03 wird das Leuchtengehäuse 03 gegenüber dem Ursprung 10 beispielsweise entlang der Anschlagskanten 15, 16 ausgerichtet und von der Schweisswerkzeugaufnahme 04 am Nullpunkt 11 fixiert. Dimensionale Unterschiede gegenüber einem Nennmaß des Leuchtengehäuses an den Halte- oder Aufnahmepunkten 12 in Bezug auf den Nullpunkt 11 können in Richtung der Erstreckung der Nuten 42 und Rippen 32 parallel zum Rand 33 des Leuchtengehäuses 03 ausgeglichen werden, wie in Fig. 2 durch Doppelpfeile S1 dargestellt.

Demnach können die Mittel 50, mit denen das Leuchtengehäuse 03 am Ursprung 10 oder allgemeiner an einem gegenüber diesem ortsfesten Nullpunkt 11 fixiert von der Schweisswerkzeugaufnahme 04 aufgenommen oder gehalten wird, Nuten 41 und/oder Vorsprünge an der Schweisswerkzeugaufnahme 04 umfassen, gegenüber denen am Leuchtengehäuse 03 beispielsweise eigens hierfür vorgesehene korrespondierende Rippen und/oder Ausnehmungen das Leuchtengehäuse 03 am Nullpunkt 11 und/oder relativ zum Ursprung 10 festlegen.

Demnach können ebenfalls die Mittel 55, mit denen das Leuchtengehäuse 03 an vom Ursprung 10 entfernten Halte- oder Aufnahmepunkten 12 schwimmend gegenüber dem Ursprung 10 gelagert ist, Nuten 42 und/oder Vorsprünge an der Schweisswerkzeugaufnahme 04 umfassen, in welchen das Leuchtengehäuse 03 gegenüber der Schweisswerkzeugaufnahme 04 in Richtung einer Längserstreckung der Nuten 42 und/oder Vorsprünge mittels am Leuchtengehäuse 03 beispielsweise eigens hierfür vorgesehener korrespondierender Rippen 32 und/oder Ausnehmungen relativ zum Ursprung 10 verschiebbar aufgenommen oder gehalten wird.

Alternativ oder zusätzlich können die Mittel 55, mit denen das Leuchtengehäuse 03 an vom Ursprung 10 entfernten Halte- oder Aufnahmepunkten 12 schwimmend gegenüber dem Ursprung 10 gelagert ist, ein oder mehrere Elemente 44 der Schweisswerkzeugaufnahme 04 umfassen, welche zum Zwecke der schwimmenden Lagerung beispielsweise gegenüber einer Werkzeuggrundplatte 40 zumindest in einer Richtung innerhalb einer beispielsweise durch die Werkzeuggrundplatte 40 aufgespannte oder von dieser eingenommenen Ebene verschiebbar angeordnet sind, wie dies in Fig. 2 und Fig. 3 durch Dopelpfeile S2 dargestellt ist. Parallel zu einer solchen Ebene verläuft beispielsweise die Zeichnungsebene in Fig. 2.

Vorzugsweise verläuft die Richtung, in welcher ein entsprechendes Element 44 zum Zwecke der schwimmenden Lagerung, wie durch Doppelpfeile S2 in Fig. 2 und Fig. 3 angedeutet, innerhalb der beispielsweise durch die Werkzeuggrundplatte 40 aufgespannte oder von dieser eingenommenen Ebene verschiebbar angeordnet ist, in etwa orthogonal zum Rand 33 des Leuchtengehäuses 03. Die Einschränkung «in etwa» ist hierbei zum Einen dahingehend zu verstehen, dass mittels der Vorrichtung 01 mit Leuchtengehäusen 03 mit dimensionalen Unterschieden umgegangen wird, daher sich eine Orthogonalität auf ein dem Nennmaß der Leuchtengehäuse 03 entsprechendes Nullmaß bezieht, und zum Anderen dahingehend, dass eine nur endliche Anzahl von Elementen 44 vorgesehen werden kann, wohingegen der Rand 33 einen stetigen oder unstetigen Verlauf aufweisen kann, es demnach durch den Verlauf des Rands 33 entlang eines Elements 44 zu lokalen Abweichungen von der Orthogonalität kommen kann.

Um auch mit Leuchtengehäusen 03 mit großen Abmessungen umgehen zu können, ist es vorteilhaft, beide Möglichkeiten zur schwimmenden Lagerung des Leuchtengehäuses 03 an den vom Nullpunkt 11 und damit auch vom Ursprung 10 entfernten Halte- oder Aufnahmepunkten 12 vorzusehen und zumindest teilweise zu kombinieren, wodurch ein Toleranzausgleich parallel zum Rand 33 wie durch Doppelpfeile S1 in Fig. 2 angedeutet durch die Längserstreckung der Nuten 42 und ein Toleranzausgleich orthogonal zur Längserstreckung der Nuten 42 innerhalb der einer Draufsicht auf die vom Rand 33 aufgespannte Fläche entsprechenden vorzugsweise von einer Werkzeuggrundplatte 40 eingenommenen Ebene durch eine schwimmende Lagerung wie durch Doppelpfeile S2 in Fig. 2 und Fig. 3 angedeutet beispielsweise normal zum Rand 33 innerhalb der genannten Ebene von die Nuten 42 aufweisenden Elementen 44 der Schweisswerkzeugaufnahme 04 erfolgt.

In Fig. 2 ist beispielsweise ein erstes, gegenüber dem Ursprung 10 fest angeordnetes Element 43 vorgesehen, welches den Nullpunkt 11 durch eine entsprechend in das Element 43 eingearbeitete, U- oder V-förmige Nut 41 bildet, deren Schenkel sich entlang der Anschlagskanten 15, 16 spreizen.

Das Element 43 legt damit sowohl den Nullpunkt 11, als auch die Anschlagskanten 15, 16 sowie mit deren Schnittpunkt einhergehend den Ursprung 10 fest.

Für die entlang des parallel zu einer Anschlagskante 15 verlaufenden Rand 33 des Leuchtengehäuses 03 vorgesehenen Halte- oder Aufnahmepunkten 12 sind Elemente 45 vorgesehen, welche in Bezug auf die Anschlagskanten 15, 16 fest auf der Werkzeuggrundplatte 40 angeordnet sind. Zum Ausgleich dimensionaler Unterschiede von Leuchtengehäusen 03 in Richtung der Anschlagskante 15 sind die Elemente 44 mit sich parallel zum entlang der Anschlagskante 15 parallel verlaufenden Rand 33 erstreckenden Nuten 42 versehen, in welche an den Leuchtengehäusen 03 vorgesehene Rippen 32 eingreifen. Die Rippen 32 können in den Nuten 32 parallel zur Anschlagskante 15 verschoben werden, ganz so wie es erforderlich ist, um ein Leuchtengehäuse 03 mit einer oder mehreren entsprechenden, mit der am den Nullpunkt 11 festlegenden Element 43 vorgesehenen, U- oder V-förmigen Nut 41 korrespondierenden Rippen am Ursprung festzu legen.

Für die verbleibenden, sowohl von der Anschlagskante 15, als auch vom Nullpunkt 11 entfernten Halte- oder Aufnahmepunkten 12 sind Elemente 44 vorgesehen, welche mit sich parallel zum lokal benachbarten Rand 33 des Leuchtengehäuses 03 erstreckenden Nuten 42 versehen sind, in welche an den Leuchtengehäusen 03 vorgesehene Rippen 32 eingreifen.

Die Bezugnahme auf den Rand 33 des Leuchtengehäuses 03 im Rahmen des vorliegenden Schriftstücks ist dabei nicht als eine konkrete Bezugnahme auf ein Leuchtengehäuse zu verstehen, sondern auf das konstruktive Nennmaß der Leuchtengehäuse, mit denen mittels der Vorrichtung 01 umgegangen werden soll.

Die Rippen 32 können in den Nuten 32 lokal parallel zum Rand 33 des Leuchtengehäuses 03 verschoben werden.

Zum völligen Ausgleich dimensionaler Unterschiede zwischen den Leuchtengehäusen 03 mit denen vermittels der Vorrichtung 01 umgegangen wird oder werden soll, sind die Elemente 44 zusätzlich wie durch Doppelpfeile S2 in Fig. 2 und Fig. 3 dargestellt innerhalb beispielsweise der durch die Werkzeuggrundplatte 40 aufgespannten oder von dieser eingenommenen Ebene vorzugsweise orthogonal zum lokalen Verlauf des Rands 33 des Leuchtengehäuses 03 und damit vorzugsweise orthogonal zu den Nuten 32 verschiebbar schwimmend an der Werkzeuggrundplatte 40 gelagert.

Dimensionale Unterschiede gegenüber einem Nennmaß des Leuchtengehäuses an den Halte- oder Aufnahmepunkten 12 in Bezug auf den Nullpunkt 11 können so sowohl in Richtung der Erstreckung der Nuten 42 und Rippen 32 parallel zum Rand 33 des Leuchtengehäuses 03, als auch jeweils lokal orthogonal hierzu ausgeglichen werden.

Zusammengefasst können die Mittel 55, mit denen das Leuchtengehäuse 03 an vom Ursprung 10 entfernten Halte- oder Aufnahmepunkten 12 schwimmend gegenüber dem Ursprung 10 gelagert ist, durch eine Untergliederung der Schweisswerkzeugaufnahme 04 in mehrere Elemente 43, 44, 45 ausgebildet sein, von denen mindestens ein den gegenüber dem Ursprung 10 ortsfesten Nullpunkt 11 bildendes oder im Nullpunkt 11 angeordnetes erstes Element 43 ortsfest und zumindest ein Teil der verbleibenden Elemente 44, 45 zumindest relativ zum ersten Element 43 verschiebbar schwimmend gelagert sind, beispielsweise in gerader Richtung auf das erste Element 43 zu und/oder von diesem weg.

Für eine Vorausrichtung können die Elemente 44, 45 beispielsweise auf einer Elementleiste einstellbar angeordnet sein.

Die Elemente 44 können, wie in Fig. 3 durch einen Pfeil F angedeutet, eine beispielsweise durch eine Feder 47 erzeugte Federbelastung in zumindest einer Richtung ihrer schwimmenden Lagerung aufweisen.

Denkbar ist auch, dass die Federbelastung doppelt wirkend ausgebildet ist.

In unbelastetem Zustand nehmen die Elemente 44 vorzugsweise eine Nullstellung ein, welche der Stellung des jeweiligen Elements 44 bei Aufnahme eines dem Nennmaß entsprechenden Leuchtengehäuse 03 entspricht.

Eine Bewegung der beispielsweise auf einer Elementleiste oder einer Werkzeuggrundplatte 40 schwimmend angeordneten Elemente 44 kann auf durch ein vorgegebenes Toleranzfeld, beispielsweise ein definiertes Toleranzfeld der fertigen Fahrzeugleuchte, begrenzt und dadurch zugelassen sein.

Demnach kann zumindest ein Teil der verbleibenden, nicht den Nullpunkt 11 bildenden Elemente 44, 45 innerhalb eines vorgegebenen Toleranzfelds schwimmend gelagert sein.

Um ein Abkippen einer die Randfläche 30 tragenden Leuchtengehäusewand 34 zu verhindern, können an den Elementen 43, 44, 45 Abstützungen 46 angebracht sein (Fig. 3).

Der Randbereich 20 kann zumindest abschnittsweise auf einem an die Lichtscheibe 02 angeformten, in Montageanordnung von Lichtscheibe 02 und Leuchtengehäuse 03 in Richtung des Leuchtengehäuses 03 vorstehenden, eine Schweissrippe bildenden Vorsprung 21 ausgebildet sein. Die Lichtscheibe 02 kann nach außen über diesen Vorsprung 21 überkragen (Fig. 3).

Die Mittel 06 zur Erzeugung einer Anpresskraft der mit ihrem Randbereich 20 auf der Randfläche 30 des Leuchtengehäuses 03 aufliegenden Lichtscheibe 02 können wie in Fig. 3 dargestellt eine oder mehrere auf einer einem durch die Lichtscheibe 02 zu verschließenden Leuchteninnenraum 35 abgewandten Außenseite 22 der Lichtscheibe 02 abrollende, synchron mit dem Laserstrahl 70 entlang und/oder parallel zur Schweisszone 77 mitbewegte Andrückrollen 60 umfassen (Fig. 3).

Wichtig ist hervorzuheben, dass die Erfindung einen Ausgleich von Einzelteiltoleranzen durch eine variable, selbstjustierende Schweisswerkzeug-Aufnahmetechnik ermöglicht.

Vorzugsweise werden zunächst an einer beispielsweise als Heckleuchte ausgebildeten Fahrzeugleuchte sogenannte Vorzugskanten definiert, die mit einer geringeren Toleranz, als die restlichen Kanten, die so genannten Toleranzkanten, behaftet sind.

Gegenüber diesen Vorzugskanten laufen die prozessbedingten Einzelteiltoleranzen aus.

Entsprechend den Vorzugskanten werden die Elemente 43, 45 in der Schweisswerkzeugaufnahme 04 fixiert und somit messtechnisch auf Null gesetzt.

Entsprechend den Vorzugskanten werden so durch die Elemente 43, 45 Anschlagskanten 15, 16 an der Schweisswerkzeugaufnahme 04 festgelegt.

Das Leuchtengehäuse wird an den Toleranzkanten, mittels angeformten Einhängerippen, in die Elemente 44 der Schweisswerkzeugaufnahme 04 gefügt.

Die einzelnen Elemente 44 sind beispielsweise werden auf einer beweglichen Elementleiste zusammengefasst.

Über die bewegliche, selbstjustierende Elementleiste legen sich die Elemente 44, beispielsweise durch eine auf den jeweiligen Anwendungsfall abgestimmte Federkraft, an die Innenseite der Rippen 32 an und bilden so einen formschlüssigen Kontakt.

Es ist ersichtlich, dass zumindest der bisher anhand der Vorrichtung 01 beschriebene Teil der Erfindung durch eine in mehrere Elemente 43, 44, 45 untergliederte Schweisswerkzeugaufnahme 04 verwirklicht sein kann, von denen ausgehend von einem oder zwei, allgemein wenigen Elementen 43 im oder nahe des Ursprungs 10 zumindest ein Teil der verbleibenden Elemente 44, 45 innerhalb einer beispielsweise parallel zu einer von einem Rand 33 des Leuchtengehäuses aufgespannten Fläche verlaufenden Ebene in zumindest jeweils einer in Fig. 2 und Fig. 3 durch Doppelpfeile S2 angedeuteten Richtung beweglich angeordnet sind. Hierdurch ergibt sich eine feste Lagerung des Leuchtengehäuses 03 an einem gegenüber einem Ursprung 10 ortsfesten Nullpunkt 11 und eine schwimmende Lagerung des Leuchtengehäuses in den verbleibenden, vom Ursprung 10 entfernte und vom Nullpunkt 11 verschiedene Halte- oder Aufnahmepunkte 12 aufweisenden Abschnitten. Dadurch kommt es zu keinem Verzug des Leuchtengehäuses 03, der hauptursächlich ist für die bestehenden Nachteile des Standes der Technik. Die Anordnung und Verschweissung der Lichtscheibe 02 kann wie beim Stand der Technik erfolgen, wobei durch die nunmehr schwimmende Lagerung des Leuchtengehäuses 03 dessen Verzug verhindert wird, der sich beim Stand der Technik zu Linienkontakt und Auseinanderklaffen zwischen dem Rand 33 des Leuchtengehäuses 03 und Lichtscheibe 02 in der Schweisszone 77 summiert. Dadurch, dass nunmehr der Randbereich 20 der Lichtscheibe 02 und die Randfläche 30 des Leuchtengehäuses 03 flächig - da verzugsfrei - aneinander anliegen können, wird eine größere Schweissnahtfestigkeit und/oder -dichtheit erzielt.

Eine zuvor beschriebene Vorrichtung 01 erlaubt eine Ausführung eines Verfahrens zur Verbindung von aus Kunststoffen hergestellten Lichtscheiben und Leuchtengehäusen von Fahrzeugleuchten durch Laserschweissen, bei welchem Verfahren:
- ein aus einem Kunststoff hergestelltes Leuchtengehäuse 03 in einer Schweisswerkzeugaufnahme 04 an einem gegenüber einem Ursprung 10 ortsfesten Nullpunkt 11 fest und an wenigstens einem von dem Ursprung 10 entfernten Halte- oder Aufnahmepunkt 12 schwimmend gelagert gehalten oder aufgenommen wird,
- eine ebenfalls aus einem Kunststoff hergestellte Lichtscheibe 02 beispielsweise ausgehend vom Ursprung 10 gegenüber einer Randfläche 30 des Leuchtengehäuses 03, welche eine von einem eine Lichtaustrittsöffnung 31 des Leuchtengehäuses 03 begrenzenden, umlaufenden Rand 33 aufgespannte Fläche fortführt, ausgerichtet und mit einem beispielsweise um die Lichtscheibe 02 umlaufenden Randbereich 20, der mit der die von dem Rand 33 aufgespannte Fläche fortführenden Randfläche 30 korrespondierend ausgestaltet ist, auf die Randfläche 30 aufgelegt wird,
- die Lichtscheibe 02 zumindest lokal nahe eines Auftreffpunkts eines das Laserschweissen ausführenden Laserstrahls 70 in dem Randbereich 20 auf die Randfläche 30 angedrückt wird,
- ein das Laserschweissen und damit den Laserschweissvorgang ausführender Laserstrahl 70 vorzugsweise durch die Lichtscheibe 02 hindurch auf eine zwischen der Randfläche 30 des in der Schweisswerkzeugaufnahme 04 gehaltenen oder aufgenommenen Leuchtengehäuses 04 und dem Randbereich 20 der gegenüber der Randfläche 30 des Leuchtengehäuses 03 ausgerichteten Lichtscheibe 20 durch das Laserschweissen und damit den Laserschweissvorgang auszubildende Schweisszone 77 gerichtet wird,
- der Laserstrahl 70 entlang der Schweisszone 77 beispielsweise um die Lichtaustrittsöffnung 31 herum geführt wird, und
- schließlich das mit der Lichtscheibe 02 nunmehr durch Laserschweissen entlang der Schweisszone 77 dicht und fest verbundene Leuchtengehäuse 03 aus der Schweisswerkzeugaufnahme 04 entnommen wird.

Der Laserstrahl 70 bleibt hierbei, während er beispielsweise um die Lichtaustrittsöffnung 31 herum entlang der Schweisszone 77 geführt wird, bevorzugt während des gesamten Laserschweissvorgangs vorzugsweise durch die Lichtscheibe 02 hindurch auf die Schweisszone 77 gerichtet.

Im Anschluss hieran kann erneut mit der Herstellung einer weiteren Laserschweissverbindung zwischen einem weiteren Leuchtengehäuse 03 und einer weiteren Lichtscheibe 02 begonnen werden, indem das Verfahren erneut ausgeführt wird.

Aufgrund der festen Lagerung an einem gegenüber einem Ursprung 10 ortsfesten Nullpunkt 11 und die schwimmende Lagerung an allen verbleibenden Halte- oder Aufnahmepunkten 12 erfährt das Leuchtengehäuse 03 unabhängig davon, ob es dimensionale Unterschiede zu einem Nennmaß aufweist, oder nicht, keinerlei Verzug durch die Schweisswerkzeugaufnahme 04.

Das Andrücken der Lichtscheibe 02 zumindest in ihrem Randbereich 20 auf die Randfläche 30 des Leuchtengehäuses 03 kann durch Erzeugung eines Unterdrucks in dem durch die Lichtscheibe 02 zu verschließenden Leuchteninnenraum 35 gegenüber einem außerhalb des Leuchteninnenraums 35 herrschenden Umgebungsdruck erfolgen.

Alternativ oder zusätzlich kann das Andrücken der Lichtscheibe 02 zumindest in deren Randbereich 20 auf die Randfläche 30 des Leuchtengehäuses 03 durch eine lokale Anpresskraft erfolgen, deren Einwirkungsbereich synchron mit dem Laserstrahl 70 entlang und/oder parallel zur Schweisszone 77 mitbewegt ist.

Beispielsweise kann das Andrücken der Lichtscheibe 02 zumindest in deren Randbereich 20 auf die Randfläche 30 des Leuchtengehäuses 03 durch eine oder mehrere auf einer einem durch die Lichtscheibe 20 zu verschließenden Leuchteninnenraum 35 abgewandten Außenseite 22 der Lichtscheibe 02 abrollende, synchron mit dem Laserstrahl entlang und/oder parallel zur Schweisszone 77 mitbewegte Andrückrollen 60 erfolgen.

Die Lichtscheibe 02 kann ebenfalls am oder gegenüber dem Ursprung 10 ausgerichtet werden, bevor oder während sie auf das Leuchtengehäuse 03 aufgelegt wird.

Am Leuchtengehäuse können mehrere Rippen 32 vorgesehen werden, mit denen das Leuchtengehäuse 03 am gegenüber dem Ursprung 10 fest positionierten Nullpunkt 11 und an dem wenigstens einen von dem Ursprung 10 entfernten und von dem Nullpunkt verschiedenen, schwimmend gelagerten Halte- oder Aufnahmepunkt 12 von der Schweisswerkzeugaufnahme 04 gehalten oder aufgenommen wird.

Es kann vorgesehen werden, die Schweisswerkzeugaufnahme 04, wie bereits zur Vorrichtung 01 erwähnt, in mehrere Elemente 43, 44, 45 zu unterteilen, von denen zumindest eins fest positioniert ist und den gegenüber dem Ursprung 10 fest positionierten Nullpunkt 11 bildet, und zumindest ein verbleibendes gegenüber dem Ursprung 10 schwimmend gelagert ist und die eine oder mehreren verbleibenden, von dem Ursprung entfernten, schwimmend gelagerten Halte- oder Aufnahmepunkte 12 bildet.

Wichtig ist hervorzuheben, dass das Verfahren vorsehen kann, zunächst Paarungen bestehend aus jeweils einem Leuchtengehäuse 03 und einer Lichtscheibe 02 mit geringstmöglichen dimensionalen Unterschieden zusammenzustellen, die dann anschließend durch Laserschweissen miteinander verbunden werden.

Hierdurch werden sich durch Größenunterschiede der miteinander durch Laserschweissen zu verbindenden Leuchtengehäuse 03 und Lichtscheiben 02 ergebende Abweichungen in der Lage der Schweisszone 77 vermieden und darüber hinaus eine noch höhere Schweissnahtfestigkeit erreicht, da durch die Zuordnung zu Paaren eine großflächigere gegenseitige Anlage von Randfläche 30 und Randbereich 20 erhalten wird.

Es ist ersichtlich, dass die Erfindung verwirklicht sein kann durch ein Zulassen von toleranzausgleichenden Bewegungen im Schweisswerkzeug beziehungsweise in der Schweisswerkzeugaufnahme 04.

Sich hierdurch ergebende Vorteile sind unter Anderem eine gleichzeitig reduzierte Dauer-Spannungsbelastung der Schweissnaht und damit einhergehend eine konstante, erhöhte Schweissnahtqualität.

Es ist ebenso ersichtlich, dass die Erfindung mit nur einer Schweisswerkzeugaufnahme 04 für Lichtscheiben 02 und/oder Leuchtengehäuse 03 mit dimensionalen Unterschieden innerhalb von beispielsweise durch deren Herstellungsprozess - insbesondere des Spritzgießens - gegebenen Toleranzgrenzen auskommt und nicht wie beim Stand der Technik für Gruppen mit geringen dimensionalen Unterschieden jeweils eigene starre Schweisswerkzeugaufnahmen benötigt werden.

Zusätzliche Vorteile gegenüber dem Stand der Technik sind geringe Herstellungskosten einhergehend mit einer sich kostensenkend auf die Herstellungskosten auswirkenden geringen Ausschussquote.

Die Erfindung ermöglicht eine durch Laserschweissen hergestellte, vollflächige, spaltfreie stoffschlüssige Verbindung zwischen einem Randbereich einer eine Lichtaustrittsöffnung eines Leuchtengehäuses abschließenden Lichtscheibe und einer eine von einem die Lichtaustrittsöffnung des Leuchtengehäuses begrenzenden, umlaufenden Rand aufgespannte Fläche fortführenden Randfläche des Leuchtengehäuses, die neben einer mechanischen Verbindung der Bauteile Lichtscheibe und Leuchtengehäuse zugleich einen dichten Abschluss des Bauteilübergangs an der Grenze zwischen den zu verbindenden Bauteilen nach sich zieht.

Sowohl die beschriebene erfindungsgemäße Vorrichtung 01, als auch das beschriebene erfindungsgemäße Verfahren können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung erwähnte Merkmale aufweisen.

So kann die Vorrichtung 01 ein oder mehrere in Verbindung mit dem Verfahren beschriebene Merkmale aufweisen, ebenso wie das Verfahren ein oder mehrere in Verbindung mit der Vorrichtung 01 beschriebene Merkmale aufweisen kann.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Vorrichtung
- 02: Lichtscheibe
- 03: Leuchtengehäuse
- 04: Schweisswerkzeugaufnahme
- 05: Mittel zur Ausrichtung des Leuchtengehäuses gegenüber dem Ursprung
- 06: Mittel zur Erzeugung einer Anpresskraft
- 07: Mittel zur Erzeugung und zum Richten und Führen des Laserstrahls

- 10: Ursprung
- 11: Nullpunkt
- 12: Halte- oder Aufnahmepunkt
- 15: Anschlagskante
- 16: Anschlagskante

- 20: Randbereich
- 21: Vorsprung
- 22: Außenseite

- 30: Randfläche
- 31: Lichtaustrittsöffnung
- 32: Rippe
- 33: Rand
- 34: Leuchtengehäusewand
- 35: Leuchteninnenraum

- 40: Werkzeuggrundplatte
- 41: Nut (U- oder V-förmig am Nullpunkt)
- 42: Nut (am Halte- oder Aufnahmepunkt)
- 43: Element (den Nullpunkt tragend)
- 44: Element (schwimmend angeordnet)
- 45: Element (mit Nut; in Bezug auf Anschlagkanten fixiert)
- 46: Abstützung
- 47: Feder

- 50: Mittel (Festlegung am Nullpunkt)

- 55: Mittel (schwimmende Lagerung an den Halte- oder Aufnahmepunkten)

- 60: Andrückrolle

- 70: Laserstrahl

- 77: Schweisszone

- S1: Doppelpfeil (für schwimmende Lagerung in Nut)
- S2: Doppelpfeil (für schwimmende Lagerung auf Element)

- 1000: Andrückrolle
- 1001: Leuchteninnenraum
- 1002: Außenseite
- 1003: Lichtscheibe
- 1004: Laserstrahl
- 1005: Randfläche
- 1006: Leuchtengehäuse
- 1007: Randbereich
- 1008: Schweisszone
- 1009: Schweisswerkzeugaufnahme
- 1010: Fangrippe
- 1011: Nut

## Patentansprüche

1. Verfahren zur Verbindung von aus Kunststoffen hergestellten Lichtscheiben (02) und Leuchtengehäusen (03) von Fahrzeugleuchten durch Laserschweissen, bei dem:
- ein Leuchtengehäuse (03) in einer Schweisswerkzeugaufnahme (04) an einem gegenüber einem Ursprung (10) ortsfesten Nullpunkt (11) fest und an wenigstens einem von dem Ursprung (10) entfernten Halte- oder Aufnahmepunkt (12) schwimmend gelagert gehalten oder aufgenommen,
- eine Lichtscheibe (02) gegenüber einer Randfläche (30) des Leuchtengehäuses (03), welche eine von einem eine Lichtaustrittsöffnung (31) des Leuchtengehäuses (03) begrenzenden, umlaufenden Rand (33) aufgespannte Fläche fortführt, ausgerichtet und mit einem Randbereich (20), der mit der die von dem Rand (33) aufgespannte Fläche fortführenden Randfläche (30) korrespondierend ausgestaltet ist, auf die Randfläche (30) aufgelegt,
- die Lichtscheibe (04) in dem Randbereich (30) auf die Randfläche (30) angedrückt,
- ein Laserstrahl (70) auf eine zwischen der Randfläche (30) des in der Schweisswerkzeugaufnahme (04) gehaltenen oder aufgenommenen Leuchtengehäuses (03) und dem Randbereich (20) der gegenüber der Randfläche (30) des Leuchtengehäuses (03) ausgerichteten Lichtscheibe (20) auszubildende Schweisszone (77) gerichtet,
- der Laserstrahl (70) entlang der Schweisszone (77) geführt, und
- das so mit der Lichtscheibe (02) verbundene Leuchtengehäuse (03) aus der Schweisswerkzeugaufnahme (04) entnommen
wird.

2. Verfahren nach Anspruch 1, wobei das Andrücken der Lichtscheibe (02) zumindest in dem Randbereich (20) auf die Randfläche (30) des Leuchtengehäuses (03) durch Erzeugung eines Unterdrucks in einem durch die Lichtscheibe (02) zu verschließenden Leuchteninnenraum (35) gegenüber einem außerhalb des Leuchteninnenraums (35) herrschenden Umgebungsdruck erfolgt.

3. Verfahren nach Anspruch 1 oder 2, wobei das Andrücken der Lichtscheibe (02) zumindest in dem Randbereich (20) auf die Randfläche (30) des Leuchtengehäuses (03) durch eine lokale Anpresskraft erfolgt, deren Einwirkungsbereich synchron mit dem Laserstrahl (70) entlang und/oder parallel zur Schweisszone (77) mitbewegt wird.

4. Verfahren nach Anspruch 1, 2 oder 3, wobei die Lichtscheibe (02) ebenfalls gegenüber dem Ursprung (10) ausgerichtet wird, bevor oder während sie auf das Leuchtengehäuse (03) aufgelegt wird.

5. Verfahren nach einem der Ansprüche 1 bis 4, wobei am Leuchtengehäuse (03) mehrere Rippen (32) vorgesehen werden, mit denen das Leuchtengehäuse (03) am gegenüber dem Ursprung (10) fest positionierten Nullpunkt (11) und an der wenigstens einen von dem Ursprung (10) entfernten, schwimmend gelagerten Halte- oder Aufnahmepunkte (12) von der Schweisswerkzeugaufnahme (04) gehalten oder aufgenommen wird.

6. Verfahren nach einem der voranstehenden Ansprüche, wobei vorgesehen ist, die Schweisswerkzeugaufnahme (04) in mehrere Elemente (43, 44, 45) zu unterteilen, von denen wenigstens eins fest positioniert ist und den gegenüber dem Ursprung (10) ortsfesten Nullpunkt (11) bildet, und zumindest ein verbleibendes gegenüber dem Ursprung (10) schwimmend gelagert ist und den einen oder die mehreren verbleibenden, von dem Ursprung (10) entfernten, schwimmend gelagerten Halte- oder Aufnahmepunkte (12) bildet.

7. Verfahren nach einem der voranstehenden Ansprüche, wobei zunächst Paarungen bestehend aus jeweils einem Leuchtengehäuse (03) und einer Lichtscheibe (02) mit geringstmöglichen dimensionalen Unterschieden zusammengestellt werden, die dann anschließend durch Laserschweissen miteinander verbunden werden.

8. Verfahren nach einem der voranstehenden Ansprüche, wobei der Laserstrahl (70) während des Laserschweissvorgangs durch die Lichtscheibe (02) hindurch auf die Schweisszone (77) gerichtet ist.

9. Vorrichtung (01) zur Verbindung von aus Kunststoffen hergestellten Lichtscheiben (02) und Leuchtengehäusen (03) von Fahrzeugleuchten durch Laserschweissen, umfassend:
- eine Schweisswerkzeugaufnahme (04) für ein Leuchtengehäuse (03),
- Mittel (05) zur Ausrichtung des Leuchtengehäuses (03) gegenüber einem Ursprung (10) unter gleichzeitiger Halterung oder Aufnahme in der Schweisswerkzeugaufnahme (04),
- Mittel (06) zur Erzeugung einer Anpresskraft einer mit einem Randbereich (20) auf einer Randfläche (30) des Leuchtengehäuses (03) aufliegenden Lichtscheibe (02), wobei die Randfläche (30) des Leuchtengehäuses (03) eine von einem eine Lichtaustrittsöffnung (31) des Leuchtengehäuses (03) begrenzenden, umlaufenden Rand (33) aufgespannte Fläche fortführt, und der Randbereich (20) der Lichtscheibe (02) mit der die von dem Rand (33) aufgespannte Fläche fortführenden Randfläche (30) korrespondierend ausgestaltet ist, und
- Mittel (07) zur Erzeugung und zum Richten und Führen eines Laserstrahls (70) auf eine und entlang einer zwischen der Randfläche (30) des in der Schweisswerkzeugaufnahme (04) gehaltenen oder aufgenommenen Leuchtengehäuses (03) und dem Randbereich (20) der Lichtscheibe (02) auszubildenden Schweisszone (77),
**gekennzeichnet durch** Mittel (50), mit denen das Leuchtengehäuse (03) an einem gegenüber einem Ursprung (10) ortsfesten Nullpunkt (11) fest von der Schweisswerkzeugaufnahme (04) aufgenommen oder gehalten wird, sowie durch Mittel (55), mit denen das Leuchtengehäuse (03) an vom Ursprung (10) entfernten Halte- oder Aufnahmepunkten (12) schwimmend gegenüber dem Ursprung (10) gelagert ist.

10. Vorrichtung nach Anspruch 9, wobei die Schweisswerkzeugaufnahme (04) Nuten (41, 42) und/oder Vorsprünge für korrespondierende Rippen (32) und/oder Ausnehmungen am Leuchtengehäuse (03) aufweist.

11. Vorrichtung nach Anspruch 10, wobei die Mittel (55), mit denen das Leuchtengehäuse (03) an vom Ursprung (10) entfernten Halte- oder Aufnahmepunkten (12) schwimmend gegenüber dem Ursprung (10) gelagert ist, Nuten (42) und/oder Vorsprünge an der Schweisswerkzeugaufnahme (04) umfassen, in welchen das Leuchtengehäuse (03) gegenüber der Schweisswerkzeugaufnahme (04) in Richtung einer Längserstreckung der Nuten (42) und/oder Vorsprünge mittels am Leuchtengehäuse (03) vorgesehener Rippen (32) und/oder Ausnehmungen relativ zum Ursprung (10) verschiebbar aufgenommen oder gehalten wird.

12. Vorrichtung nach einem der Ansprüche 9, 10 oder 11, wobei die Mittel (50), mit denen das Leuchtengehäuse (03) am Nullpunkt (11) fest und die Mittel, mit denen das Leuchtengehäuse an vom Ursprung entfernten Halte- oder Aufnahmepunkten (12) schwimmend gegenüber dem Ursprung (10) gelagert ist, durch eine Untergliederung der Schweisswerkzeugaufnahme (04) in mehrere Elemente (43, 44, 45) ausgebildet sind, von denen wenigstens ein erstes Element (43, 45) ortsfest und zumindest ein Teil der verbleibenden Elemente (44) zumindest relativ zum ersten Element (43, 45) verschiebbar schwimmend gelagert ist.

13. Vorrichtung nach Anspruch 12, wobei zumindest ein Teil der verbleibenden Elemente (44) innerhalb eines vorgegebenen Toleranzfelds schwimmend gelagert sind.

14. Vorrichtung nach einem der Ansprüche 9 bis 13, wobei an wenigstens einem Teil der Elemente (43, 44, 45) Abstützungen (46) angebracht sind.

15. Vorrichtung nach einem der Ansprüche 9 bis 14, wobei die Mittel (06) zur Erzeugung einer Anpresskraft der mit ihrem Randbereich (20) auf der Randfläche (30) des Leuchtengehäuses (03) aufliegenden Lichtscheibe (02) eine oder mehrere auf einer einem durch die Lichtscheibe (02) zu verschließenden Leuchteninnenraum (35) abgewandten Außenseite (22) der Lichtscheibe (02) abrollende, synchron mit dem Laserstrahl (70) entlang und/oder parallel zur Schweisszone (77) mitbewegte Andrückrollen (60) umfassen.

## Claims

1. A method for the connection by means of laser welding of light lenses (02) and lamp housings (03) for vehicle lamps produced from plastics, in which method:
- a lamp housing (03) is held or received in a fixed-mounted manner in a welding tool receptacle (04) at a zero point (11) that is stationary relative to an origin (10), and held or received in a float-mounted manner at at least one holding point or reception point (12) that is distant from the origin (10);
- a light lens (02) is aligned relative to a lateral face (30) of the lamp housing (03), which lateral face (30) continues an area spanned by a circumferential edge (33) delimiting a light-emitting opening (31) of the lamp housing (03), and is disposed on the lateral face (30) with an edge area (20) designed corresponding to the lateral face (30) continuing the area spanned by the edge (33);
- the light lens (02) is pressed against the lateral face (30) in the edge area (20);
- a laser beam (70) is directed at a weld zone (77) to be formed between the lateral face (30) of the lamp housing (03) held or received in the welding tool receptacle (04) and the edge area (20) of the light lens (02) aligned relative to the lateral face (30) of the lamp housing (03);
- the laser beam (70) is guided along the weld zone (77); and
- the lamp housing (03) connected in this manner to the light lens (02) is removed from the welding tool receptacle (04).

2. The method according to claim 1, wherein the pressing of the light lens (02) at least in the edge area (20) against the lateral face (30) of the lamp housing (03) is carried out by generating a negative pressure inside a lamp interior (35) to be closed by the light lens (02) in relation to an ambient pressure prevailing outside the lamp interior (35).

3. The method according to claim 1 or 2, wherein the pressing of the light lens (02) at least in the edge area (20) against the lateral face (30) of the lamp housing (03) is carried out by a local contact pressing force, of which the influence range is moved along synchronously with the laser beam (70) along and/or parallel to the weld zone (77).

4. The method according to claim 1, 2, or 3, wherein the light lens (02) is likewise aligned relative to the origin (10) prior to or while being disposed on the lamp housing (03).

5. The method according to one of the claims 1 to 4, wherein a plurality of ribs (32) are provided on the lamp housing (03), with which ribs (32) the lamp housing (03) is held or received by the welding tool receptacle (04) at the zero point (11) positioned fixedly relative to the origin (10), and at the at least one float-mounted holding point or reception point (12) distant from the origin (10).

6. The method according to one of the previous claims, wherein it is provided to subdivide the welding tool receptacle (04) into a plurality of elements (43, 44, 45), of which at least one is fixedly positioned and forms the zero point (11) that is stationary relative to the origin (10), and of which at least one remaining one is float-mounted relative to the origin (10) and forms the one or more remaining float-mounted holding points or reception points (12) that are distant from the origin (10).

7. The method according to one of the previous claims, wherein pairs, each consisting of a lamp housing (03) and a light lens (02) with the least possible dimensional differences, are first assembled, and are subsequently connected to each other by means of laser welding.

8. The method according to one of the previous claims, wherein the laser beam (70) is directed through the light lens (02) at the weld zone (77) during the laser welding process.

9. A device (01) for the connection by means of laser welding of light lenses (02) and lamp housings (03) for vehicle lamps produced from plastics, the device (01) comprising:
- a welding tool receptacle (04) for a lamp housing (03);
- means (05) for the alignment of the lamp housing (03) relative to an origin (10) under simultaneous holding or receiving in the welding tool receptacle (04);
- means (06) for generating a contact pressing force of a light lens (02) disposed with an edge area (20) on a lateral face (30) of the lamp housing (03), wherein the lateral face (30) of the lamp housing (03) continues an area spanned by a circumferential edge (33) delimiting a light-emitting opening (31) of the lamp housing (03), and wherein the edge area (20) of the light lens (02) is designed corresponding to the lateral face (30) continuing the area spanned by the edge (33); and
- means (07) for generating and for directing and guiding a laser beam (70) at and along a weld zone (77) to be formed between the lateral face (30) of the lamp housing (03) held or received in the welding tool receptacle (04) and the edge area (20) of the light lens (02);
**characterised by** means (50) with which the lamp housing (03) is received or held in a fixed manner by the welding tool receptacle (04) at a zero point (11) that is stationary relative to an origin (10), as well as by means (55) with which the lamp housing (03) is float-mounted relative to the origin (10) at holding points or reception points (12) distant from the origin (10).

10. The device according to claim 9, wherein the welding tool receptacle (04) has grooves (41, 42) and/or protrusions for corresponding ribs (32) and/or recesses on the lamp housing (03).

11. The device according to claim 10, wherein the means (55), with which the lamp housing (03) is float-mounted relative to the origin (10) at holding points or reception points (12) distant from the origin (10), comprise grooves (42) and/or protrusions at the welding tool receptacle (04), in which grooves (42) and/or protrusions the lamp housing (03) is received or held so as to be shiftable relative to the welding tool receptacle (04) in the direction of a longitudinal extension of the grooves and/or protrusions relative to the origin (10) by means of ribs (32) and/or recesses provided on the lamp housing (03).

12. The device according to one of the claims 9, 10, or 11, wherein the means (50) with which the lamp housing (03) is fixed-mounted at the zero point (11), and the means with which the lamp housing (03) is float-mounted relative to the origin (10) at holding points or reception points (12) distant from the origin, are formed by a subdividing of the welding tool receptacle (04) into a plurality of elements (43, 44, 45), of which at least one first element (43, 45) is stationary-mounted and at least part of the remaining elements (44) are float-mounted so as to be shiftable at least relative to the first element (43, 45).

13. The device according to claim 12, wherein at least part of the remaining elements (44) are mounted floating within a specified tolerance zone.

14. The device according to one of the claims 9 to 13, wherein supports (46) are attached to at least a part of the elements (43, 44, 45).

15. The device according to one of the claims 9 to 14, wherein the means (06), for the purpose of generating a contact pressing force of the light lens (02) with its edge area (20) disposed on the lateral face (30) of the lamp housing (03), comprise one or more pressure rollers (60) rolling off on an outer side (22) of the light lens (02), which outer side (22) faces away from a lamp interior (35) to be closed by the light lens (02), with the one or more pressure rollers (60) being moved along synchronously with the laser beam (70) along and/or parallel to the weld zone (77).

## Revendications

1. Procédé de raccordement par soudage au laser, de diffuseurs (02) et de boîtiers de phares (03), fabriqués en matières plastiques, pour phares de véhicules, dans lequel :
- un boîtier de phares (03) est maintenu ou logé agencé flottant dans un logement d'outil de soudage (04) de manière fixe sur un point zéro (11) fixe par rapport à une origine (10) et sur au moins un point de maintien et de logement (12) à distance de l'origine (10),
- un diffuseur (02) orienté par rapport à une surface périphérique (30) du boîtier de phares (03), laquelle vient en prolongement d'une surface s'étendant à partir d'un bord périphérique (33) délimitant une ouverture de sortie de lumière (31) du boîtier de phares (03), et déposé sur ladite surface périphérique (30) en une zone de périphérie (20) qui est conçue correspondante à la surface périphérique (30) en prolongement de la surface s'étendant à partir du bord (33),
- le diffuseur (02) est appuyé sur la surface périphérique (30) dans la zone périphérique (20),
- un rayon laser (70) est dirigé sur une zone de soudage (77) à constituer entre la surface périphérique (30) du boîtier de phares (03) maintenu ou logé dans le logement d'outil de soudage (04) et la zone périphérique (20) du diffuseur (02) orienté à l'opposé de la surface périphérique (30) du boîtier de phares (03),
- le rayon laser (70) est conduit le long de la zone de soudage (77), et
- le boîtier de phares (03) relié de cette manière au diffuseur (02) est retiré du logement d'outil de soudage (04).

2. Procédé selon la revendication 1, la compression du diffuseur (02), au moins dans la zone périphérique (20), sur la surface périphérique (30) du boîtier de phares (03) s'effectuant par génération d'une dépression dans un espace intérieur du phare (35) à fermer par le biais du diffuseur (02), par rapport à une pression environnante régnant à l'extérieur dudit espace intérieur du phare (35).

3. Procédé selon la revendication 1 ou 2, la compression du diffuseur (02) s'effectuant au moins dans la zone périphérique (20) sur la surface périphérique (30) du boîtier de phares (03) par une force de compression locale dont la zone d'effet est déplacée le long et/ou parallèlement à la zone de soudage (77) en même temps que le rayon laser (70) et de manière synchrone.

4. Procédé selon la revendication 1, 2 ou 3, le diffuseur (02) étant également orienté par rapport à l'origine (10) avant ou pendant sa pose sur le boîtier de phares (03).

5. Procédé selon l'une des revendications 1 à 4, étant prévues sur le boîtier de phares (03) plusieurs nervures (32) avec lesquelles le boîtier de phares (03) est maintenu ou logé par le logement d'outil de soudage (04) au point zéro (11) de position fixe par rapport à l'origine (10) et à l'au moins un des points de maintien ou de logement (12) espacé de l'origine (10) et agencé flottant.

6. Procédé selon l'une quelconque des revendications précédentes, étant prévue une subdivision du logement d'outil de soudage (4) en plusieurs éléments (43, 44, 45) dont au moins un a une position fixe et constitue le point zéro (11) fixe par rapport à l'origine (10), et au moins un élément restant est agencé flottant par rapport à l'origine (10) et constitue ledit ou les plusieurs point(s) de maintien ou de logement (12) restant(s) agencé(s) flottant(s) et espacé(s) de l'origine (10).

7. Procédé selon l'une quelconque des revendications précédentes, des appariements tout d'abord composés respectivement d'un boîtier de phares (03) et d'un diffuseur (02) étant assemblés avec des différences dimensionnelles les plus faibles possibles, ces couples étant ensuite reliés entre eux par soudage au laser.

8. Procédé selon l'une quelconque des revendications précédentes, le rayon laser (70) étant dirigé, pendant l'opération de soudage au laser, vers la zone de soudage (77) en passant à travers le diffuseur (02).

9. Dispositif (01) de raccordement par soudage au laser de diffuseurs (02) et de boîtiers de phares (03), fabriqués en matières plastiques, pour phares de véhicules, comprenant :
- un logement d'outil de soudage (04) pour un boîtier de phares (03),
- des moyens (05) destinés à orienter le boîtier de phares (03) par rapport à une origine (10) tout en le maintenant ou logeant simultanément dans le logement d'outil de soudage (04),
- des moyens (06) destinés à générer une force de compression avec un diffuseur (02) reposant en une zone périphérique (20) sur une surface périphérique (30) du boîtier de phares (03), la surface périphérique (30) du boîtier de phare (03) venant en prolongement d'une surface s'étendant à partir d'un bord (33) périphérique délimitant une ouverture de sortie de lumière (31) du boîtier de phares (03), et la zone périphérique (20) du diffuseur (02) étant conçue correspondante à la surface périphérique (30) en prolongement de la surface s'étendant à partir du bord (33), et
- des moyens (07) destinés à générer et à diriger et conduire un rayon laser (70) sur et le long d'une zone de soudage (77) à constituer entre la surface périphérique (30) du boîtier de phares (03) maintenu ou logé dans le logement d'outil de soudage (04), et la zone périphérique (20) du diffuseur (02),
**caractérisé par** des moyens (50) avec lesquels le boîtier de phares (03) est logé ou maintenu fixement par le logement d'outil de soudage (04) à un point zéro (11) fixe par rapport à une origine (10), ainsi que par des moyens (55) avec lesquels le boîtier de phares (03) est agencé flottant par rapport à l'origine (10) à des points de maintien ou de logement (12) espacés de l'origine (10).

10. Dispositif selon la revendication 9, le logement d'outil de soudage (04) présentant des gorges (41, 42) et/ou des saillies pour des nervures (32) correspondantes et/ou des cavités dans le boîtier de phares (03).

11. Dispositif selon la revendication 10, les moyens (55), avec lesquels le boîtier de phares (03) est agencé flottant par rapport à l'origine (10) à des points de maintien ou de logement (12) espacés de l'origine (10), comprenant des gorges (42) et/ou des saillies dans le logement d'outil de soudage (04) en vis-à-vis du logement d'outil de soudage (04) dans le sens d'un étirement longitudinal des gorges (42) et/ou des saillies, dans lesquelles le boîtier de phare (03) est logé ou maintenu coulissant par rapport à l'origine (10), et ce au moyen de nervures (32) et/ou cavités prévues sur le boîtier de phares (03).

12. Dispositif selon l'une quelconque des revendications 9, 10 ou 11, les moyens (50), avec lesquels le boîtier de phares (03) est agencé fixe au point zéro (11) et les moyens, avec lesquels le boîtier de phares est agencé flottant aux points de maintien ou de logement (12) par rapport à l'origine (10) et espacés de l'origine, étant conçus en plusieurs éléments (43, 44, 45) par une subdivision du logement d'outil de soudage (04), dont au moins un premier élément (43, 45) est agencé à position fixe et au moins une partie des éléments restants (44) sont agencés coulissants flottants au moins par rapport au premier élément (43, 45).

13. Dispositif selon la revendication 12, au moins une partie des éléments restants (44) étant agencés flottants au sein d'un champ de tolérance prédéterminé.

14. Dispositif selon l'une quelconque des revendications 9 à 13, des appuis (46) étant installés sur au moins une partie des éléments (43, 44, 45)

15. Dispositif selon l'une quelconque des revendications 9 à 14, les moyens (06) destinés à générer une force de compression du diffuseur (02) reposant en sa zone périphérique (20) sur la surface périphérique (30) du boîtier de phares (03), comprenant un ou plusieurs rouleau(x) de compression (60) déplacés en même temps, de manière synchrone avec le rayon laser (70) le long et/ou parallèlement à la zone de soudage (77), et déroulant sur un côté extérieur (22) du diffuseur (02) du côté opposé à un espace intérieur de phare (35) à fermer par le biais du diffuseur (02).
